# EUROPEAN PATENT SPECIFICATION

(11) **EP 4 674 081 B1**
(45) Date of publication and mention of the grant of the patent: **04.11.2026**
(21) Application number: 23720733.7
(22) Date of filing: 31.03.2023
(51) Int. Cl.: H04L 5/00

(54) **METHODS FOR CHANNEL STATE INFORMATION REFERENCE SIGNAL OVERHEAD REDUCTION FOR CHANNEL CORRELATION REPORT**
VERFAHREN ZUR KANALSTATUSINFORMATIONSREFERENZSIGNAL-OVERHEAD-REDUKTION FÜR KANALKORRELATIONSBERICHT
PROCÉDÉS DE RÉDUCTION DE SURDÉBIT DE SIGNAL DE RÉFÉRENCE D'INFORMATIONS D'ÉTAT DE CANAL POUR RAPPORT DE CORRÉLATION DE CANAL

(43) Date of publication of application: 07.01.2026
(73) Proprietor: Google LLC, Mountain View, CA 94043 (US)
(72) Inventor: LIOU, Jia-Hong, Taipei City, Taiwan 10548 (TW); ZHANG, Yushu, Beijing 100190 (CN)
(74) Representative: Marks & Clerk GST
(86) International application number: PCT/CN2023/085379
(87) International publication number: WO 2024/197786

(56) References cited:
- EP-A1- 4 145 724
- US-A1- 2022 124 740

## Description

### TECHNICAL FIELD

The present disclosure relates generally to wireless communication, and more particularly, to methods for reducing the overhead associated with configuring and measuring tracking reference signals (TRSs) carried on channel state information reference signal (CSI-RS) resources to generate channel correlation reports.

### BACKGROUND

The Third Generation Partnership Project (3GPP) specifies a radio interface referred to as fifth generation (5G) new radio (NR) (5G NR). An architecture for a 5G NR wireless communication system includes a 5G core (5GC) network, a 5G radio access network (5G-RAN), a user equipment (UE), etc. The 5G NR architecture seeks to provide increased data rates, decreased latency, and/or increased capacity compared to prior generation cellular communication systems.

Wireless communication systems, in general, provide various telecommunication services (e.g., telephony, video, data, messaging, broadcasts, etc.) based on multipleaccess technologies, such as orthogonal frequency division multiple access (OFDMA) technologies, that support communication with multiple UEs. Improvements in mobile broadband continue the progression of such wireless communication technologies. For example, a 5G-RAN may transmit tracking reference signals (TRSs) on channel state information reference signal (CSI-RS) resources for UEs to measure, track, and report the time and frequency offset between the UEs and the 5G-RAN. However, mechanisms for a 5G-RAN to configure and trigger UEs to measure and report the measurements based on TRSs is often inefficient, resulting in lower system performance.

US 2022/124740 A1 describes a communication scheme and a system thereof for converging internet of things (IoT) technology and a 5th generation (5G) communication system for supporting a higher data transmission rate beyond that of a 4th generation (4G) system. The disclosure can be applied to intelligent services (for example, services related to smart homes, smart buildings, smart cities, smart cars, connected cars, health care, digital education, retail business, security, and safety) based on the 5G communication technology and the IoT-related technology. The disclosure proposes a method and an apparatus for transmitting and receiving a reference signal to efficiently use resources in a wireless communication system.

EP 4 145 724 A1 describes a method and a device for controlling the measuring and reporting of adj acent channel interference in a wireless communication system. The method comprises the steps of: transmitting, to a base station, a terminal capability report related to the measurement and report of sub-band-specific adjacent channel leakage (ACL) interference; receiving, from the base station, setting information that indicates a frequency resource and a time resource for the measuring and reporting of sub-band-specific ACL interference; measuring sub-band-specific ACL interference on the basis of the setting information; and reporting, to the base station, the measured sub-band-specific ACL interference.

### BRIEF SUMMARY

The object of the invention is achieved by the subject-matter of the independent claims. The dependent claims describe advantageous embodiments. The scope of protection of the invention is limited by the appended claims.

A network entity, such as a base station or a unit of a base station (e.g., 5G radio access network (5G-RAN)), may transmit, to a user equipment (UE), a tracking reference signal (TRS) on one or more sets of channel state information reference signal (CSI-RS) resources for the UE to perform time/frequency tracking. Thus, the TRS may include a CSI-RS for tracking. The network entity may configure the UE based on a radio resource control (RRC) parameter (e.g., , of a non-zero power (*NZP*)-*CSI-RS-ResourceSet*) to indicate that the CSI-RS resources are for transmitting the TRS. The network entity may transmit the TRS in a periodic manner or an aperiodic manner and may transmit the TRS on a set of TRS resources in different symbols. For example, the network entity may transmit a set of TRSs in two symbols in a slot or in four symbols in two consecutive slots. The network entity may configure the UE to measure and report channel correlation based on one or more sets of TRSs. For example, the UE may measure the channel correlation for the TRS symbols within a slot to report intra-burst channel correlation. The UE may also measure the channel correlation for TRS symbols across a number of slots to report inter-burst channel correlation.

However, aperiodic TRS structures may not flexibly support inter-burst channel correlation when the network entity transmits downlink control information (DCI) to indicate aperiodic transmissions of TRS on a single set of aperiodic TRS resources because the DCI can only trigger one channel correlation measurement and reporting. In addition, periodic TRS structures for transmitting TRSs on a set of periodic TRS resources may have a minimum periodicity of 10ms, which may be too large to support inter-burst channel correlation for fast channel variation identification. Attempts to configure a smaller periodicity or to use multiple TRS sets may increase the overhead and the network power consumption. In addition, when a UE that measures TRSs of a smaller periodicity changes status, such as when there is a beam change or in a handover scenario, there may not be any UEs with the need or the capability to report channel correlations based on the TRSs.

Aspects of the present disclosure address the above-noted and other deficiencies for inter-burst channel correlation and issues associated with increased TRS overhead/ In some implementations, the techniques include multi-burst based aperiodic TRS for inter-burst channel correlation report, joint aperiodic TRS and periodic TRS for inter-burst channel correlation report, dynamic update of configuration parameters for periodic TRS for channel correlation report, and channel correlation report based on semi-persistent TRS.

According to some aspects, a UE receives, from a network entity, a configuration for a channel correlation report. The configuration indicates a channel measurement resource (CMR) that carries a TRS. The UE receives, from the network entity, a triggering indication for the channel correlation report based on the CMR carrying the TRS. The UE receives, from the network entity, the TRS. The TRS includes a periodic TRS, an aperiodic TRS, a semi-persistent TRS, or any combination thereof. The UE transmits, to the network entity, the channel correlation report. The channel correlation report includes measurement information for a channel correlation associated with the TRS.

According to some aspects, a network entity transmits, to a UE, a configuration for a channel correlation report. The configuration indicates a CMR that carries a TRS. The network entity transmits, to the UE, a triggering indication for the channel correlation report based on the CMR carrying the TRS. The network entity transmits, to the UE, the TRS. The TRS includes a periodic TRS, an aperiodic TRS, a semi-persistent TRS, or any combination thereof. The network entity receives, from the UE, the channel correlation report. The channel correlation report includes measurement information for a channel correlation associated with the TRS.

### BRIEF DESCRIPTION OF THE DRAWINGS

FIG. 1 illustrates a diagram of a wireless communications system that includes a plurality of user equipment (UEs) and network entities in communication over one or more cells.
FIG. 2 is a diagram illustrating measurements of an intra-burst channel correlation and an inter-burst channel correlation based on a set of tracking reference signals (TRSs).
FIG. 3 is a signaling diagram illustrating communications between a user equipment (UE) and a network entity for the UE to measure and report channel correlations based on TRSs.
FIG. 4 is a diagram illustrating a multi-burst aperiodic TRS structure based on a single set of aperiodic TRSs from the network entity where the network entity configures a number of bursts and a delay between every two consecutive bursts of the aperiodic TRSs for the UE to generate an inter-burst channel correlation report.
FIG. 5 is a diagram illustrating a multi-burst aperiodic TRS structure based on a single set of aperiodic TRSs from the network entity where the network entity configures a list of delays between a first burst and other bursts of the aperiodic TRSs for the UE to generate an inter-burst channel correlation report.
FIG. 6 is a diagram illustrating a multi-burst aperiodic TRS structure based on a single set of aperiodic TRSs from the network entity where the network entity configures a number of bursts and a list of delays between a first burst and other bursts of the aperiodic TRSs for the UE to generate an inter-burst channel correlation report.
FIG. 7 is a diagram illustrating a multi-burst aperiodic TRS structure based on multiple sets of aperiodic TRSs from the network entity where the network entity configures a list of delays between a first burst from a first TRS set and bursts from other TRS sets of the aperiodic TRSs for the UE to generate an inter-burst channel correlation report.
FIG. 8 is a diagram illustrating a joint periodic and aperiodic TRS structure based on periodic TRSs and aperiodic TRSs from the network entity where the network entity configures a delay between bursts from the periodic TRSs and the aperiodic TRSs for the UE to generate an inter-burst channel correlation report.
FIG. 9 is a flowchart of a method of wireless communication at a UE.
FIG. 10 is a flowchart of a method of wireless communication at a network entity.
FIG. 11 is a diagram illustrating a hardware implementation for an example UE apparatus.
FIG. 12 is a diagram illustrating a hardware implementation for one or more example network entities.

### DETAILED DESCRIPTION

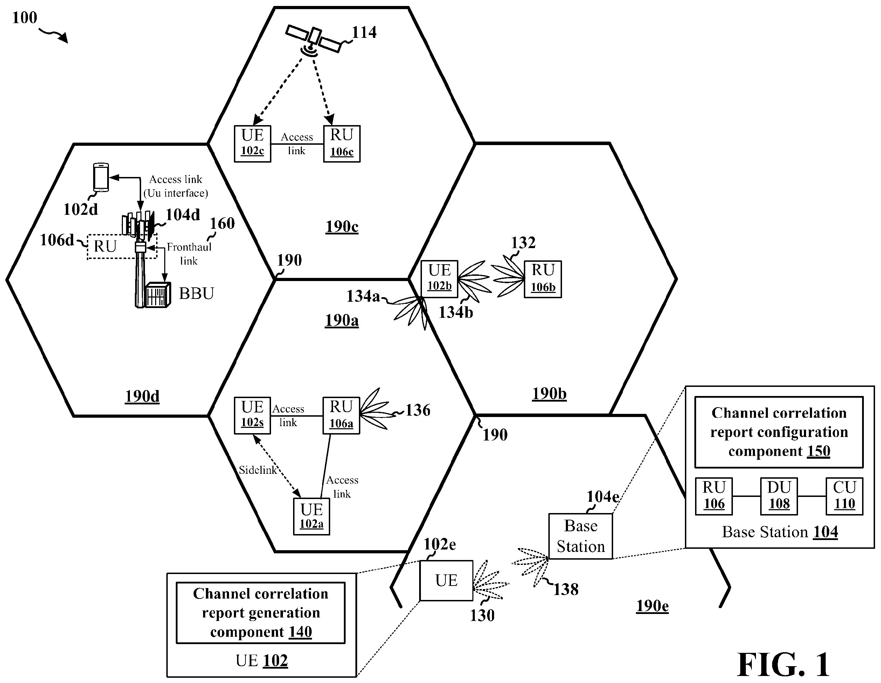

FIG. 1 illustrates a diagram 100 of a wireless communications system associated with a plurality of cells 190. The wireless communications system includes user equipment (UEs) 102 and base stations/network entities 104. Some base stations may include an aggregated base station architecture and other base stations may include a disaggregated base station architecture. The aggregated base station architecture utilizes a radio protocol stack that is physically or logically integrated within a single radio access network (RAN) node. A disaggregated base station architecture utilizes a protocol stack that is physically or logically distributed among two or more units (e.g., radio unit (RU) 106, distributed unit (DU) 108, central unit (CU) 110). For example, a CU 110 is implemented within a RAN node, and one or more DUs 108 may be co-located with the CU 110, or alternatively, may be geographically or virtually distributed throughout one or multiple other RAN nodes. The DUs 108 may be implemented to communicate with one or more RUs 106. Any of the RU 106, the DU 108 and the CU 110 can be implemented as virtual units, such as a virtual radio unit (VRU), a virtual distributed unit (VDU), or a virtual central unit (VCU). The base station/network entity 104 (e.g., an aggregated base station or disaggregated units of the base station, such as the RU 106 or the DU 108), may be referred to as a transmission reception point (TRP).

Operations of the base station 104 and/or network designs may be based on aggregation characteristics of base station functionality. For example, disaggregated base station architectures are utilized in an integrated access backhaul (IAB) network, an open-radio access network (O-RAN) network, or a virtualized radio access network (vRAN), which may also be referred to a cloud radio access network (C-RAN). Disaggregation may include distributing functionality across the two or more units at various physical locations, as well as distributing functionality for at least one unit virtually, which can enable flexibility in network designs. The various units of the disaggregated base station architecture, or the disaggregated RAN architecture, can be configured for wired or wireless communication with at least one other unit. For example, the base stations 104d/104e and/or the RUs 106a-106d may communicate with the UEs 102a-102d and 102s via one or more radio frequency (RF) access links based on a Uu interface. In examples, multiple RUs 106 and/or base stations 104 may simultaneously serve the UEs 102, such as by intra-cell and/or inter-cell access links between the UEs 102 and the RUs 106/base stations 104.

The RU 106, the DU 108, and the CU 110 may include (or may be coupled to) one or more interfaces configured to transmit or receive information/signals via a wired or wireless transmission medium. For example, a wired interface can be configured to transmit or receive the information/signals over a wired transmission medium, such as via the fronthaul link 160 between the RU 106d and the baseband unit (BBU) 112 of the base station 104d associated with the cell 190d. The BBU 112 includes a DU 108 and a CU 110, which may also have a wired interface (e.g., midhaul link) configured between the DU 108 and the CU 110 to transmit or receive the information/signals between the DU 108d and the CU 110d. In further examples, a wireless interface, which may include a receiver, a transmitter, or a transceiver, such as an RF transceiver, configured to transmit and/or receive the information/signals via the wireless transmission medium, such as for information communicated between the RU 106a of the cell 190a and the base station 104e of the cell 190e via cross-cell communication beams 136-138 of the RU 106a and the base station 104e.

The RUs 106 may be configured to implement lower layer functionality. For example, the RU 106 is controlled by the DU 108 and may correspond to a logical node that hosts RF processing functions, or lower layer PHY functionality, such as execution of fast Fourier transform (FFT), inverse FFT (iFFT), digital beamforming, physical random access channel (PRACH) extraction and filtering, etc. The functionality of the RU 106 may be based on the functional split, such as a functional split of lower layers.

The RUs 106 may transmit or receive over-the-air (OTA) communication with one or more UEs 102. For example, the RU 106b of the cell 190b communicates with the UE 102b of the cell 190b via a first set of communication beams 132 of the RU 106b and a second set of communication beams 134b of the UE 102b, which may correspond to inter-cell communication beams or, in some examples, cross-cell communication beams. For instance, the UE 102b of the cell 190b may communicate with the RU 106a of the cell 190a via a third set of communication beams 134a of the UE 102b and a fourth set of communication beams 136 of the RU 106a. DUs 108 can control both real-time and non-real-time features of control plane and user plane communications of the RUs 106.

Any combination of the RU 106, the DU 108, and the CU 110, or reference thereto individually, may correspond to a base station 104. Thus, the base station 104 may include at least one of the RU 106, the DU 108, or the CU 110. The base stations 104 provide the UEs 102 with access to a core network. The base stations 104 may relay communications between the UEs 102 and the core network (not shown). The base stations 104 may be associated with macrocells for higher-power cellular base stations and/or small cells for lower-power cellular base stations. For example, the cell 190e may correspond to a macrocell, whereas the cells 190a-190d may correspond to small cells. Small cells include femtocells, picocells, microcells, etc. A network that includes at least one macrocell and at least one small cell may be referred to as a "heterogeneous network."

Transmissions from a UE 102 to a base station 104/RU 106 are referred to as uplink (UL) transmissions, whereas transmissions from the base station 104/RU 106 to the UE 102 are referred to as downlink (DL) transmissions. Uplink transmissions may also be referred to as reverse link transmissions and downlink transmissions may also be referred to as forward link transmissions. For example, the RU 106d utilizes antennas of the base station 104d of cell 190d to transmit a downlink/forward link communication to the UE 102d or receive an uplink/reverse link communication from the UE 102d based on the Uu interface associated with the access link between the UE 102d and the base station 104d/RU 106d.

Communication links between the UEs 102 and the base stations 104/RUs 106 may be based on multiple-input and multiple-output (MIMO) antenna technology, including spatial multiplexing, beamforming, and/or transmit diversity. The communication links may be associated with one or more carriers. The UEs 102 and the base stations 104/RUs 106 may utilize a spectrum bandwidth of *Y* MHz (e.g., 5, 10, 15, 20, 100, 400, 800, 1600, 2000, etc. MHz) per carrier allocated in a carrier aggregation of up to a total of *Yx* MHz, where *x* component carriers (CCs) are used for communication in each of the uplink and downlink directions. The carriers may or may not be adjacent to each other along a frequency spectrum. In examples, uplink and downlink carriers may be allocated in an asymmetric manner, with more or fewer carriers allocated to either the uplink or the downlink. A primary component carrier and one or more secondary component carriers may be included in the component carriers. The primary component carrier may be associated with a primary cell (PCell) and a secondary component carrier may be associated with a secondary cell (SCell).

Some UEs 102, such as the UEs 102a and 102s, may perform device-to-device (D2D) communications over sidelink. For example, a sidelink communication/D2D link utilizes a spectrum for a wireless wide area network (WWAN) associated with uplink and downlink communications. Such sidelink/D2D communication may be performed through various wireless communications systems, such as wireless fidelity (Wi-Fi) systems, Bluetooth systems, Long Term Evolution (LTE) systems, New Radio (NR) systems, etc.

The electromagnetic spectrum is often subdivided into different classes, bands, channels, etc., based on different frequencies/wavelengths associated with the electromagnetic spectrum. Fifth-generation (5G) NR is generally associated with two operating frequency ranges (FRs) referred to as frequency range 1 (FR1) and frequency range 2 (FR2). FR1 ranges from 410 MHz - 7.125 GHz and FR2 ranges from 24.25 GHz - 71.0 GHz, which includes FR2-1 (24.25 GHz - 52.6 GHz) and FR2-2 (52.6 GHz - 71.0 GHz). Although a portion of FR1 is actually greater than 6 GHz, FR1 is often referred to as the "sub-6 GHz" band. In contrast, FR2 is often referred to as the "millimeter wave" (mmW) band. FR2 is different from, but a near subset of, the "extremely high frequency" (EHF) band, which ranges from 30 GHz - 300 GHz and is sometimes also referred to as a "millimeter wave" band. Frequencies between FR1 and FR2 are often referred to as "mid-band" frequencies. The operating band for the mid-band frequencies may be referred to as frequency range 3 (FR3), which ranges 7.125 GHz - 24.25 GHz. Frequency bands within FR3 may include characteristics of FR1 and/or FR2. Hence, features of FR1 and/or FR2 may be extended into the mid-band frequencies. Higher operating frequency bands have been identified to extend 5G NR communications above 52.6 GHz associated with the upper limit of FR2. Three of these higher operating frequency bands include FR2-2, which ranges from 52.6 GHz - 71.0 GHz, FR4, which ranges from 71.0 GHz - 114.25 GHz, and FR5, which ranges from 114.25 GHz - 300 GHz. The upper limit of FR5 corresponds to the upper limit of the EHF band. Thus, unless otherwise specifically stated herein, the term "sub-6 GHz" may refer to frequencies that are less than 6 GHz, within FR1, or may include the mid-band frequencies. Further, unless otherwise specifically stated herein, the term "millimeter wave", or mmW, refers to frequencies that may include the mid-band frequencies, may be within FR2-1, FR4, FR2-2, and/or FR5, or may be within the EHF band.

The UEs 102 and the base stations 104/RUs 106 may each include a plurality of antennas. The plurality of antennas may correspond to antenna elements, antenna panels, and/or antenna arrays that may facilitate beamforming operations. For example, the RU 106b transmits a downlink beamformed signal based on a first set of communication beams 132 to the UE 102b in one or more transmit directions of the RU 106b. The UE 102b may receive the downlink beamformed signal based on a second set of communication beams 134b from the RU 106b in one or more receive directions of the UE 102b. In a further example, the UE 102b may also transmit an uplink beamformed signal (e.g., sounding reference signal (SRS)) to the RU 106b based on the second set of communication beams 134b in one or more transmit directions of the UE 102b. The RU 106b may receive the uplink beamformed signal from the UE 102b in one or more receive directions of the RU 106b.

The UE 102b may perform beam training to determine the best receive and transmit directions for the beamformed signals. The transmit and receive directions for the UEs 102 and the base stations 104/RUs 106 may or may not be the same. In further examples, beamformed signals may be communicated between a first base station/RU 106a and a second base station 104e. For instance, the base station 104e of the cell 190e may transmit a beamformed signal to the RU 106a based on the communication beams 138 in one or more transmit directions of the base station 104e. The RU 106a may receive the beamformed signal from the base station 104e of the cell 190e based on the RU communication beams 136 in one or more receive directions of the RU 106a. In further examples, the base station 104e transmits a downlink beamformed signal to the UE 102e based on the communication beams 138 in one or more transmit directions of the base station 104e. The UE 102e receives the downlink beamformed signal from the base station 104e based on UE communication beams 130 in one or more receive directions of the UE 102e. The UE 102e may also transmit an uplink beamformed signal to the base station 104e based on the UE communication beams 130 in one or more transmit directions of the UE 102e, such that the base station 104e may receive the uplink beamformed signal from the UE 102e in one or more receive directions of the base station 104e.

The base station 104 may include and/or be referred to as a network entity. That is, "network entity" may refer to the base station 104 or at least one unit of the base station 104, such as the RU 106, the DU 108, and/or the CU 110. The base station 104 may also include and/or be referred to as a next generation evolved Node B (ngeNB), a next generation NB (gNB), an evolved NB (eNB), an access point, a base transceiver station, a radio base station, a radio transceiver, a transceiver function, a basic service set (BSS), an extended service set (ESS), a TRP, a network node, network equipment, or other related terminology. The base station 104 or an entity at the base station 104 can be implemented as an IAB node, a relay node, a sidelink node, an aggregated (monolithic) base station, or a disaggregated base station including one or more RUs 106, DUs 108, and/or CUs 110. A set of aggregated or disaggregated base stations may be referred to as a next generation-radio access network (NG-RAN). In some examples, the UE 102a operates in dual connectivity (DC) with the base station 104e and the base station/RU 106a. In such cases, the base station 104e can be a master node and the base station/RU 160a can be a secondary node.

Uplink/downlink signaling may also be communicated via a satellite positioning system (SPS) 114. In an example, the SPS 114 of the cell 190c may be in communication with one or more UEs 102, such as the UE 102c, and one or more base stations 104/RUs 106, such as the RU 106c. The SPS 114 may correspond to one or more of a Global Navigation Satellite System (GNSS), a global position system (GPS), a non-terrestrial network (NTN), or other satellite position/location system. The SPS 114 may be associated with LTE signals, NR signals (e.g., based on round trip time (RTT) and/or multi-RTT), wireless local area network (WLAN) signals, a terrestrial beacon system (TBS), sensor-based information, NR enhanced cell ID (NR E-CID) techniques, downlink angle-of-departure (DL-AoD), downlink time difference of arrival (DL-TDOA), uplink time difference of arrival (UL-TDOA), uplink angle-of-arrival (UL-AoA), and/or other systems, signals, or sensors.

Still referring to FIG. 1, in certain aspects, any of the UEs 102 may include a channel correlation report generation component 140 configured to receive from any of the base station/network entity 104 a configuration for a channel correlation report. The configuration may indicate a channel measurement resource (CMR) that carries a tracking reference signal (TRS). The channel correlation report generation component 140 may receive from the base station/network entity 104 a triggering indication for the channel correlation report based on the CMR carrying the TRS. The channel correlation report generation component 140 may receive from the base station/network entity 104 the TRS. The TRS may include a periodic TRS, a periodic TRS, a semi-persistent TRS, or a combination thereof. The channel correlation report generation component 140 may transmit to the base station/network entity 104 the channel correlation report. The channel correlation report may include measurement information for a channel correlation associated with the TRS.

In certain aspects, any of the base stations 104 or a network entity of the base stations 104 may include a channel correlation report configuration component 150 configured to transmit to any of the UEs 102 a configuration for a channel correlation report. The configuration may indicate a CMR that carries a TRS a triggering indication for the channel correlation report based on the CMR carrying the TRS. The channel correlation report configuration component 150 may transmit to any of the UEs 102 a triggering indication for the channel correlation report based on the CMR carrying the TRS. The channel correlation report configuration component 150 may transmit to any of the UEs 102 the TRS. The TRS may include a periodic TRS, a periodic TRS, a semi-persistent TRS, or a combination thereof. The channel correlation report configuration component 150 may receive from any of the UEs 102 the channel correlation report. The channel correlation report may include measurement information for a channel correlation associated with the TRS.

Accordingly, FIG. 1 describes a wireless communication system that may be implemented in connection with aspects of one or more other figures described herein. Further, although the following description may be focused on 5G NR, the concepts described herein may be applicable to other similar areas, such as 5G-Advanced and future versions, LTE, LTE-advanced (LTE-A), and other wireless technologies, such as 6G.

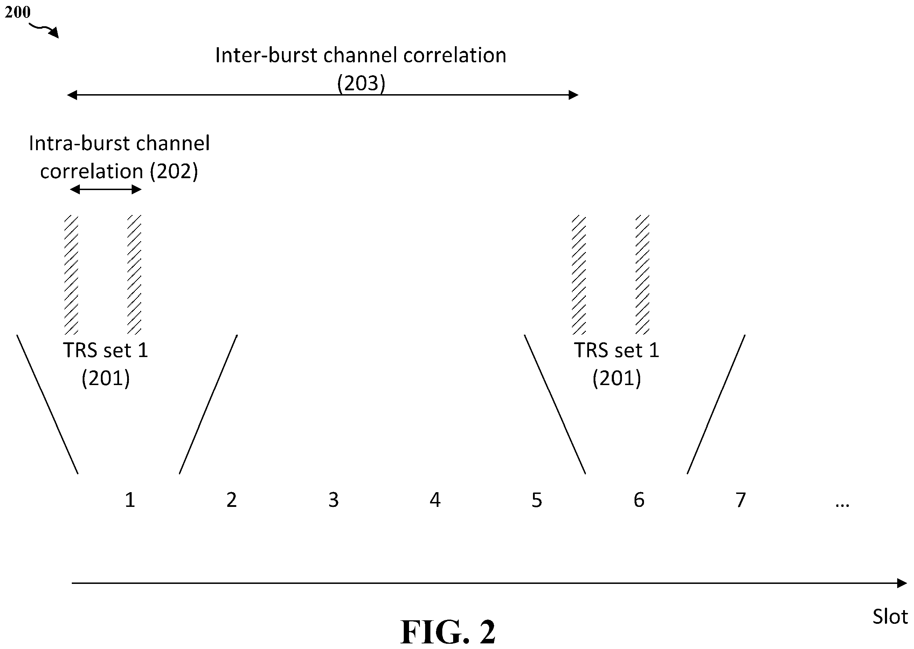

FIG. 2 illustrates a diagram 200 of a UE measuring an intra-burst channel correlation 202 and an inter-burst channel correlation 203 based on a set of tracking reference signals (TRSs). A network entity may transmit, to a UE, TRSs on one or more sets of channel measurement resources (CMRs), for example channel state information reference signal (CSI-RS) resources, for the UE to perform time/frequency tracking. The CMRs carrying the TRSs may be referred to as TRS resources. A TRS resource may be characterized by parameters such as its bandwidth, subcarriers, power, symbol indices within a slot, scrambling identifier, etc. The TRS resources for different sets of TRS may be distinguished by their associated parameters. The network entity may transmit a set of TRSs on multiple symbols in a slot in a periodic or aperiodic manner. For example, the network entity may transmit the TRSs of TRS set 1 (203) on symbols 4 and 8 of both slots 1 and 6.

The network entity may configure a UE to measure and report the intra-burst channel correlation 202 and/or inter-burst channel correlation 203 (collectively referred to as a channel correlation) based on the TRSs. A channel correlation may indicate variations in time of the downlink channel from the network entity to the UE, and in particular, the correlation in time-domain of the downlink channel based on measuring the characteristics of the TRSs separated by a delay. The network entity may configure the UE with the delay for measuring the channel correlation. For example, the network entity may configure a delay of 4 symbols for the UE to measure and report intra-burst channel correlation 202 of TRSs of TRS set 1 (203) between symbols 4 and 8 of slot 1. In another example, the network entity may configure a larger delay for the UE to measure and report inter-burst channel correlation 203 of TRSs of TRS set 1 (203) between slots 1 and 6. In one implementation, the UE may measure the channel correlation between symbols 4 of slots 1 and 6 and the channel correlation between symbols 8 of slots 1 and 6. The UE may then average the two correlations to report the inter-burst channel correlation 203 to the network entity.

Aspects of the present disclosure decrease the signaling overhead associated with the network entity configuring the UE to measure and report inter-burst channel correlations where the TRSs are separated by at least one slot and more generally for other types of channel correlations including intra-burst channel correlations. The reduced overhead allows the network entity to flexibly configure the UE to measure and generate inter-burst channel correlation reports based on multi-burst aperiodic TRSs, joint aperiodic TRSs and periodic TRSs, semi-persistent TRSs, or combinations thereof. The reduced overhead also allows the network to dynamically update the configuration parameters for periodic TRSs to support channel reporting of fast variations in channel characteristics.

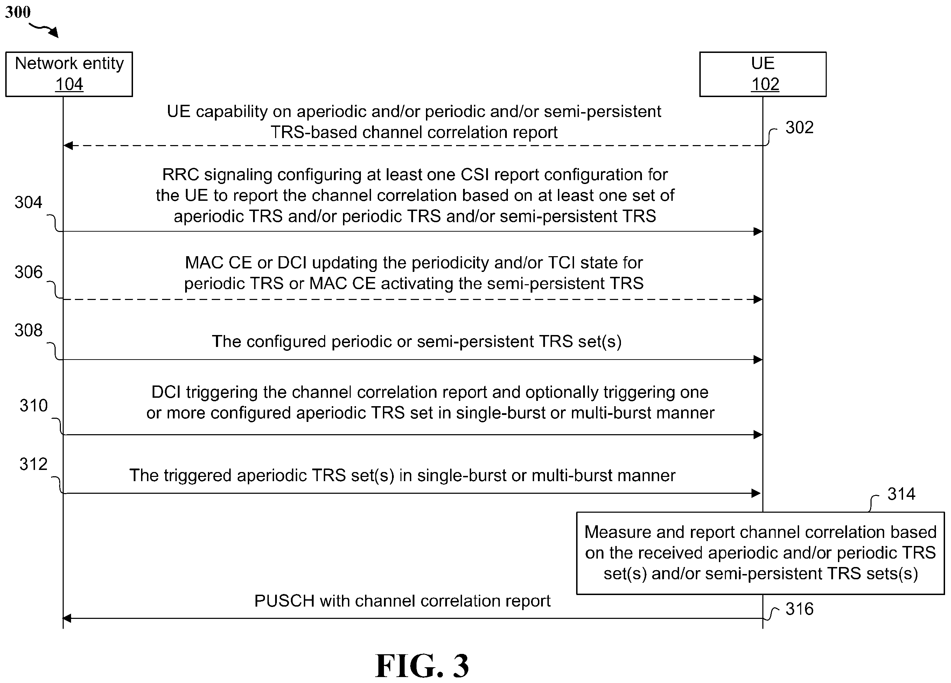

FIG. 3 is a signaling diagram 300 illustrating communications between a user equipment (UE) 102 and a network entity 104 for the UE 102 to measure and report channel correlations based on TRSs. The UE may correspond to any of the UEs 102 of Figure 1 and the network entity may correspond to any of the base stations 104 or a unit of the base station 104 such as the RU 106, DU 108, CU 110, etc.

The UE 102 may transmit 302, to the network entity 104, information on capabilities of the UE 102 to measure channel correlations based on aperiodic TRS, periodic TRS, semi-persistent TRS, or combinations thereof. In one implementation, the information on the capabilities of the UE 102 may include the capability of the UE 102 to receive an update to one or more parameters of the periodic TRS. In other implementations, the network entity 104 may receive information on the capabilities of the UE 102 from a core network (e.g., Access and Mobility Management Function (AMF)). In other implementations, the network entity may receive the capability information from another network entity.

Based on the received capability information of the UE 102, the network entity 104 may transmit 304 a Radio Resource Control (RRC) signaling to the UE 102 to configure a CSI report configuration to specify the UE to generate at least one CSI report. The CSI report configuration may configure the UE to report a channel correlation based on at least one set of aperiodic TRS, periodic TRS, semi-persistent TRS, or combinations thereof carried on non-zero power (NZP) CSI-RS resources. In one implementation, the network entity 104 may configure the parameter *trs-Info,* of the *(NZP)-CSI-RS-ResourceSet* parameter structure to indicate that the CSI-RS resources are carrying the TRSs.

In one implementation, the RRC signaling to configure the CSI report configuration may indicate a RRC configuration or reconfiguration message such as the *RRCReconfiguration* parameter structure. In one implementation, the RRC signaling may indicate a System Information Block (SIB) such as an existing SIB (e.g., SIB1) or a new SIB (e.g., SIB *J,* where *J* is an integer greater than 21). In one implementation, the CSI report configuration may be the *CSI-ReportConfig* parameter structure with the report quantity parameter *reportQuantity* configured for channel correlation.

If network entity 104 configures the UE 102 to report a channel correlation based on periodic TRSs or semi-persistent TRSs, the network 104 may transmit 306 configuration information to the UE 102 to indicate or update one or more parameters of the periodic TRSs or semi-persistent TRSs. In one implementation, if the channel correlation report is based on a set of periodic TRSs, the network entity 104 may transmit updates to the periodicity, transmission configuration indicator (TCI) and/or quasi-co-location (QCL) information of the set of periodic TRSs by a Medium Access Control (MAC) Control Element (MAC CE) or Downlink Control Information (DCI). In one implementation, if the channel correlation report is based on a set of semi-persistent TRSs, the network entity 104 may transmit a MAC CE to the UE 102 to activate the set of semi-persistent TRSs. The network entity 104 may transmit another MAC CE to the UE 102 to deactivate the set of semi-persistent TRSs after the network entity 104 determines the channel correlation report based on the semi-persistent TRSs is no longer necessary.

The network entity 104 may transmit 308 one or more sets of periodic TRSs or one or more sets of semi-persistent TRSs that the UE will measure for the channel correlation report as configured by the CSI report configuration.

The network entity 104 may transmit 310 a DCI to trigger the UE 102 to measure the TRSs to generate the channel correlation report based on the CSI report configuration. Based on this DCI or another DCI, the network entity 104 may trigger one or more sets of aperiodic TRSs.

The network entity 104 may transmit 312 one or more sets of aperiodic TRSs in a single burst or in multiple bursts.

The UE 102 may measure 314 the channel correlation based on the received set or sets of aperiodic TRSs, periodic TRSs, semi-persistent TRSs, or combinations thereof.

The UE 102 may transmit the measured channel correlation to the network entity 104 in a channel correlation report using Physical Uplink Shared Channel (PUSCH) or a MAC-CE.

As indicated, the network entity 104 may transmit aperiodic TRSs in multiple bursts for the UE 102 to generate a channel correlation report. In one implementation, when the CSI report configuration (e.g., *CSI-ReportConfig* parameter structure) configures the UE 102 to report a channel correlation based on aperiodic TRSs, the network entity 104 may configure the report quantity parameter *reportQuantity* to only indicate either a channel correlation report (e.g., *'timeDomainChannelProperty*') or no report ('*none*')*.* The network entity 104 may refrain from configuring the report quantity parameter *reportQuantity* to indicate a value other than a channel correlation report (e.g., '*timeDomainChannelProperty*') or no report ('*none*') when it configures the aperiodic TRS as CMR in the CSI report configuration. In the event the UE 102 receives the CSI report configuration with aperiodic TRS as CMR and the report quality parameter *reportQuantity* is set to a value other than a channel correlation report (e.g., '*timeDomainChannelProperty*') or no report ('*none*'), the UE 102 may determine that it receives an error configuration and may transmit a RRC reconfiguration request. In addition, the network entity 104 may configure the UE 102 to indicate the timing information of the multi-burst aperiodic TRSs or the delays between the multiple bursts of aperiodic TRSs for the UE to measure the channel correlation.

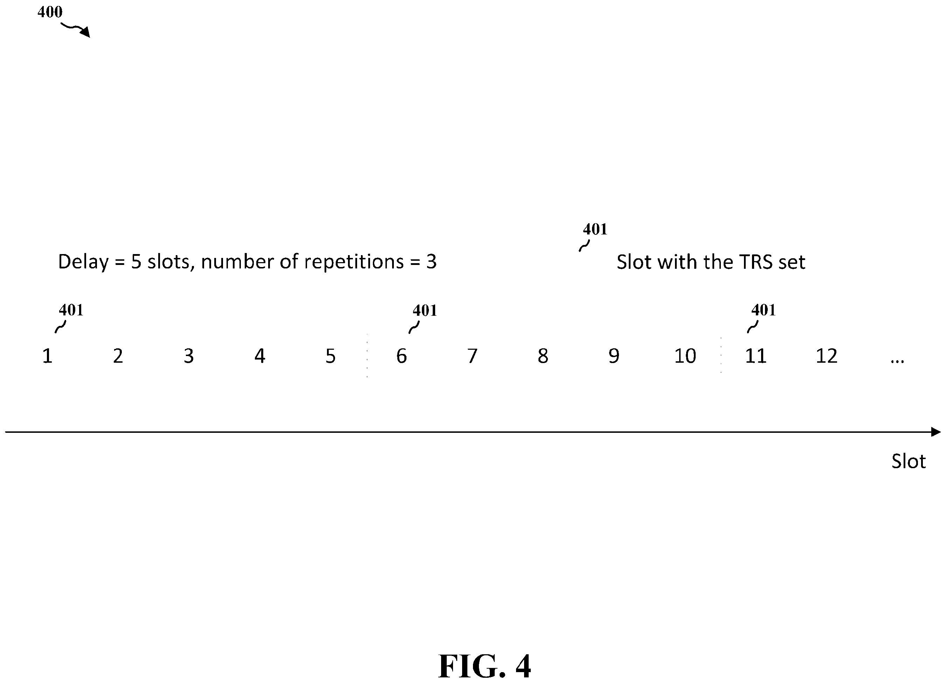

FIG. 4 is a diagram 400 illustrating a multi-burst aperiodic TRS structure based on a single set of aperiodic TRSs from the network entity where the network entity configures a number of bursts and a delay between every two consecutive bursts of the aperiodic TRSs for the UE to generate an inter-burst channel correlation report.

The network entity may transmit the set of aperiodic TRSs in N bursts (also referred to as repetitions) in a uniform or non-uniform manner in time domain for the channel correlation measurement and report. The N repetitions of aperiodic TRSs are separated by offset(s). The network entity may configure the delay(s) between the repetitions for measuring an inter-burst channel correlation by RRC signaling, MAC CE or DCI. In some implementations, the network entity may refrain from configuring the delay(s) for an inter-burst channel correlation measurement that are not part of the offset(s) between every two repetitions, where the UE calculates the correlation between the channel measured from a TRS instance in slot x and the channel measured from another TRS instance in slot x+delay. FIG. 4 shows three uniform repetitions of TRSs 401 with an offset of 5 slots between each two consecutive TRSs 401 at slots 1, 6 and 11. The network entity configures the delay for measuring the channel correlation to be at 5 slots to match the offset.

In some implementations, when the network entity configures delay(s) that are not part of the offset(s) between every two repetitions of the aperiodic TRSs, the UE may not report the channel correlation or may report a default channel correlation, e.g., 0. In some implementations, the network entity may configure the delay(s) for inter-burst channel correlation as a multiple of offsets. For example, the delay for inter-burst channel correlation may be K offset(s), where K is an integer greater than 1.

In some embodiments, the network entity may configure the number of repetitions and/or the offset(s) between every two consecutive repetitions for a set of aperiodic TRSs by RRC signaling, MAC CE or DCI. For example, the network entity may configure the number of repetitions by a RRC parameter (e.g., *nrofRepetition*) for a set of aperiodic TRSs. In one implementation, if the network entity does not configure the number of repetitions, the UE may apply a default value, e.g., 1. In another example, the network entity may configure the offset(s) between every two consecutive repetitions by a RRC parameter or a list of RRC parameters (*repetitionOffset*) for a set of aperiodic TRSs. In one implementation, if the network entity does not configure the offset(s), the UE may apply a default value, e.g., 1 slot. In another example, the network entity may configure the number of repetitions and/or offset(s) between every two consecutive repetitions by a DCI field in the DCI used to trigger the set of aperiodic TRSs. For example, the network entity may configure the timing of the aperiodic TRSs by using the DCI trigger in operation 310 of FIG. 3

In some implementations, when the network entity configures a set of aperiodic TRSs with N repetitions, the TRS set may be for channel correlation report only. In this case, the network entity may refrain from indicating the TRS as the source reference signal for quasi-co-location indication in a TCI state. In some implementations, the network entity may configure the number of repetitions and/or the offset(s) between every two consecutive repetitions of the TRSs based on the capabilities of the UE. For example, the UE may report the UE capabilities indicating at least one of the following elements: whether it supports channel correlation report based on aperiodic TRS; whether it supports multiple repetitions based on a set of aperiodic TRSs; the supported maximum number of repetitions; whether it supports non-uniform repetition for the aperiodic TRS set, etc.

In some implementations, the network entity may configure a list of delays between the repetitions of aperiodic TRSs for measuring the inter-burst channel correlation. The network entity and the UE may determine the number of repetitions and/or the offset(s) between every consecutive repetitions based on the configured delay(s). For example, the number of repetitions may be the number of delays in the list plus 1. In another example, the first delay in the list may indicate the offset between the first and second bursts (repetitions), the second delay in the list may indicate the offset between the first and third bursts (repetitions), and so on. The UE may determine the delay(s) for measuring the inter-burst channel correlation based on the delay(s) in the list. In another example, the delays in the list are a multiple of a minimal delay, and the offset(s) between every two consecutive bursts are based on the minimum delay in the list.

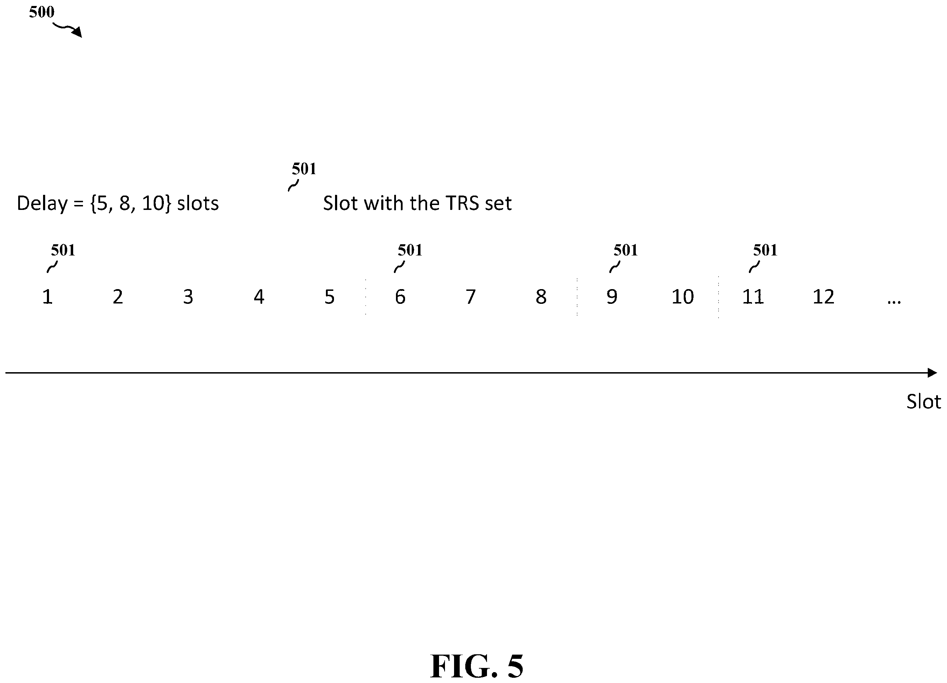

FIG. 5 is a diagram 500 illustrating a multi-burst aperiodic TRS structure based on a single set of aperiodic TRSs from the network entity where the network entity configures a list of delays between a first burst and other bursts of the aperiodic TRSs for the UE to generate an inter-burst channel correlation report. FIG. 5 shows four bursts in the set of aperiodic TRSs 501 in slots 1, 6, 9, and 11. The network entity configures a list of delays with values of {5, 8, 10} to indicate the delays in number of slots between the first aperiodic TRS 501 in slot 1 and the subsequent TRSs 501 in slots 6, 9, and 11, respectively. The UE may determine the number of bursts to be 4 based on the list of three delays and may determine the delays for measuring the inter-burst channel correlation based on the list. For example, the UE may measure channel correlation between the TRSs in slots in {1, 6}, between the TRSs in slots {1,9} and between the TRSs in slots {1, 11} to generate the inter-burst channel correlation report.

In some implementations, the network entity may configure a list of delay between the repetitions of aperiodic TRSs for measuring the inter-burst channel correlation and the number of repetitions. The network and the UE may determine the location for each repetition (i.e., which slot/symbol of the corresponding repetition) based on the configured delay(s) and the number of repetitions. In one example, the network entity may configure a single delay to apply to every two consecutive repetitions. In another example, the network entity may configure a list of delays and a minimum delay is applied to every two consecutive repetitions of the aperiodic TRSs.

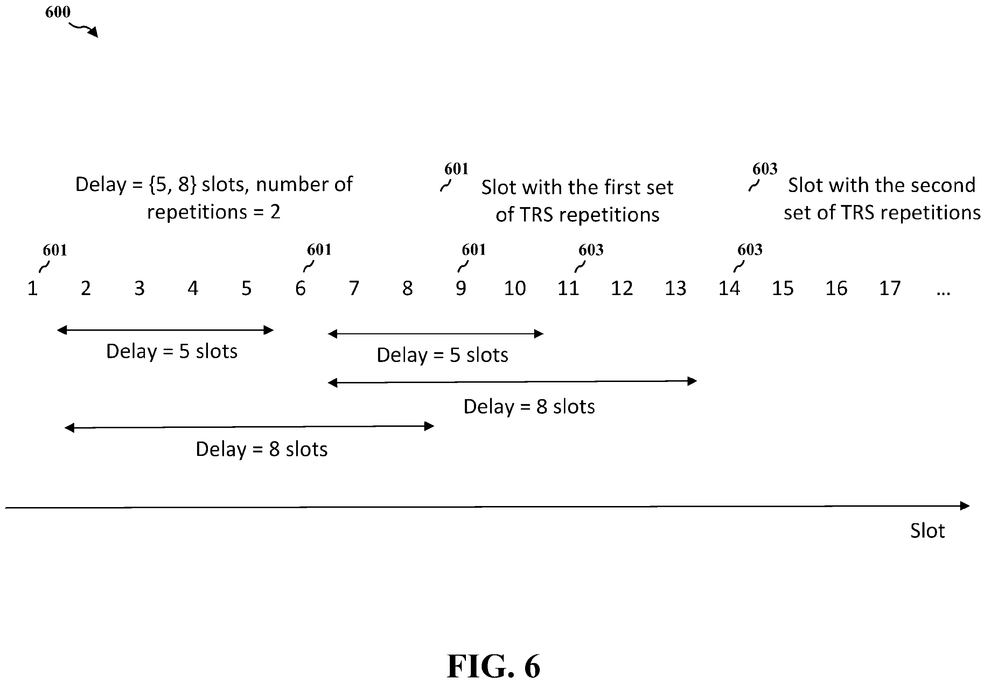

FIG. 6 is a diagram 600 illustrating a multi-burst aperiodic TRS structure based on a single set of aperiodic TRSs from the network entity where the network entity configures a number of bursts and a list of delays between a first burst and other bursts of the aperiodic TRSs for the UE to generate an inter-burst channel correlation report. The network entity configures a list of delays with values {5, 8}to indicate the delays in number of slots between the first aperiodic TRS 601 in slot 1 and the subsequent TRSs 601 in slots 6, and 9, respectively. The UE may determine the locations of the first set of repetitions of TRSs for measuring the inter-burst channel correlation based on the configured delays and the first repetition of TRS 601 in slot 1. The UE may determine the locations of the second set of repetitions of TRSs for measuring the inter-burst channel correlation based on the configured delays and the second repetition of TRS 601 in slot 6.

In another aspect, the network entity may transmit multi-burst aperiodic TRSs based on multiple sets of TRSs for the UE to generate a channel correlation report. The network entity may transmit the multiple sets of aperiodic TRSs in uniform or non-uniform multiplexing in time domain for the channel correlation measurement and report. The network may configure the offset(s) between every two sets of aperiodic TRSs. The TRS resources for multiple sets of aperiodic TRSs may be distinguished by their associated parameters. Each aperiodic TRS set may have a corresponding ID.

In some implementations, the network entity may configure a common or reference configuration for N sets of aperiodic TRSs. The common or reference configuration may include parameters of the TRS resources such as their TCI state, bandwidth, subcarriers, power offset between the TRS resources and synchronization signal block (SSB), number of TRS resources per set, symbol indices within a slot for each TRS resource, scrambling identifier, etc. The network entity may further configure N separate or delta configurations for the N aperiodic TRS sets with respect to the common or reference configuration. The N separate or delta configurations may include parameter(s) with values specific to the TRS resources of the N aperiodic TRS sets. The network may transmit the N aperiodic TRS sets from the same antenna port.

In some implementations, the network entity may configure the parameters of the TRS resources of the N aperiodic TRS sets based on the capabilities of the UE. For example, the UE may report the UE capabilities indicating at least one of the following elements: whether it supports channel correlation report based on aperiodic TRS; whether it supports channel correlation report based on multiple aperiodic TRS sets; the supported maximum number of aperiodic TRS sets; whether it supports non-uniform multiplexing for the aperiodic TRS set, etc.

In some implementations, the network entity may refrain from configuring the delay(s) for the UE to measure and report the channel correlation report where the delays are not part of the offset(s) between every two sets of the aperiodic TRSs. Alternatively, when the configured delay(s) are not part of the offset(s) between every two aperiodic TRS sets, the UE may not report the channel correlation or may report a default channel correlation, e.g., 0. In some implementations, the network entity may configure the delay(s) for inter-burst channel correlation as a multiple of offsets between two consecutive sets of aperiodic TRSs. For example, the delay for inter-burst channel correlation may be K offset(s), where K is an integer greater than 1. The network entity may configure the delay(s) by RRC signaling, MAC CE or DCI.

In some implementations, in the CSI report configuration, the network entity may configure the delay(s) for the UE to measure the channel correlation of the N aperiodic TRS sets (or their corresponding set IDs). The network entity may trigger the UE to measure and report the channel correlation of the N aperiodic TRS sets based on the CSI report configuration using one or more DCIs.

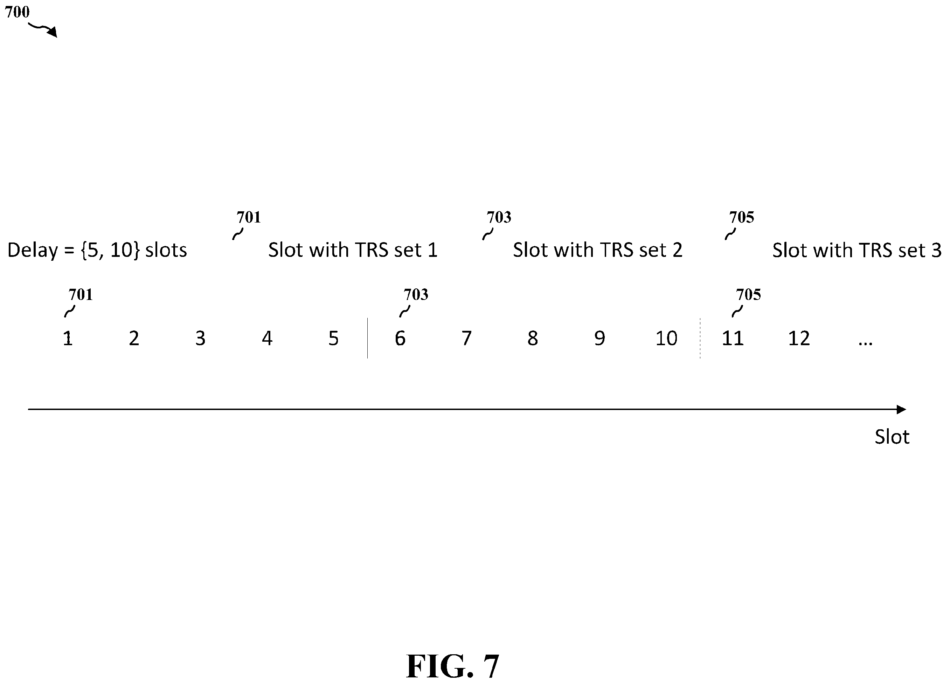

FIG. 7 is a diagram 700 illustrating a multi-burst aperiodic TRS structure based on multiple sets of aperiodic TRSs from the network entity where the network entity configures a list of delays between a first burst from a first TRS set and bursts from other TRS sets of the aperiodic TRSs for the UE to generate an inter-burst channel correlation report. The network entity configures a list of delays with values {5, 10) to indicate the delays in number of slots between the first aperiodic TRS set 701 in slot 1 and the second TRS set 703 in slot 6, and between the first aperiodic TRS set 701 in slot 1 and the third TRS set 705 in slot 11, respectively. The UE may measure the inter-burst channel correlation of the three aperiodic TRS sets based on the configured delays.

In another aspect, the UE may measure and report a channel correlation report based on joint periodic TRSs and aperiodic TRSs. The network entity may transmit at least one set of periodic TRSs and at least one set of aperiodic TRSs for the channel correlation measurement and report. The network entity may configure the offset(s) between the periodic and aperiodic TRS sets, such as the offset(s) between every two TRS sets.

In some implementations, the network entity may configure a common or reference configuration for the periodic and aperiodic sets of TRSs. The common or reference configuration may include parameters of the TRS resources such as their TCI state, bandwidth, subcarriers, power offset between the TRS resources and synchronization signal block (SSB), number of TRS resources per set, symbol indices within a slot for each TRS resource, scrambling identifier, etc. The network entity may further configure separate or delta configurations for the periodic and aperiodic TRS sets with respect to the common or reference configuration. The separate or delta configurations may include parameter(s) with values specific to the TRS resources of the periodic and aperiodic TRS sets. The network may transmit the periodic and aperiodic TRS sets from the same antenna port.

In some implementations, the network entity may indicate or configure to the UE which periodic TRS set(s) are associated with which aperiodic TRS set(s) for the channel correlation measurement and report. For example, the network entity may configure a configuration to indicate the resource set ID(s) of one or more periodic TRS set(s), the resource set ID(s) of one or more aperiodic TRS set(s), and the association between the periodic TRS sets(s) and the aperiodic TRS set(s) based on the IDs. In another example, the network entity may configure the resource set ID(s) of periodic TRS(s) set in an aperiodic TRS set, where the periodic TRS set(s) are associated with the aperiodic TRS set. Conversely, the network entity may configure the resource set ID(s) of aperiodic TRS(s) set in a periodic TRS set, where the aperiodic TRS set(s) are associated with the periodic TRS set.

In some implementations, the network entity may configure the parameters of the TRS resources of the joint periodic and aperiodic TRS sets based on the capabilities of the UE. For example, the UE may report the UE capabilities indicating at least one of the following elements: whether it supports channel correlation report based on joint periodic and aperiodic TRS sets; the supported maximum number of joint periodic and aperiodic TRS sets, etc.

In some implementations, the network entity may refrain from configuring the delay(s) for the UE to measure and report the channel correlation report where the delays are not part of the offset(s) between every two configured TRSs. Alternatively, when the configured delay(s) are not part of the offset(s) between every two configured TRS sets, the UE may not report the channel correlation or may report a default channel correlation, e.g., 0. In some implementations, the network entity may configure the delay(s) for inter-burst channel correlation as a multiple of offsets between two consecutive sets. For example, the delay for inter-burst channel correlation may be K offset(s), where K is an integer greater than 1. The network entity may configure the delay(s) by RRC signaling, MAC CE or DCI.

In some implementations, in the CSI report configuration, the network entity may configure the delay(s) for the UE to measure the channel correlation based on the joint and aperiodic TRS sets (or their corresponding resource set IDs). The network entity may trigger the UE to measure and report the channel correlation of the joint periodic and aperiodic TRS sets based on the CSI report configuration using one or more DCIs.

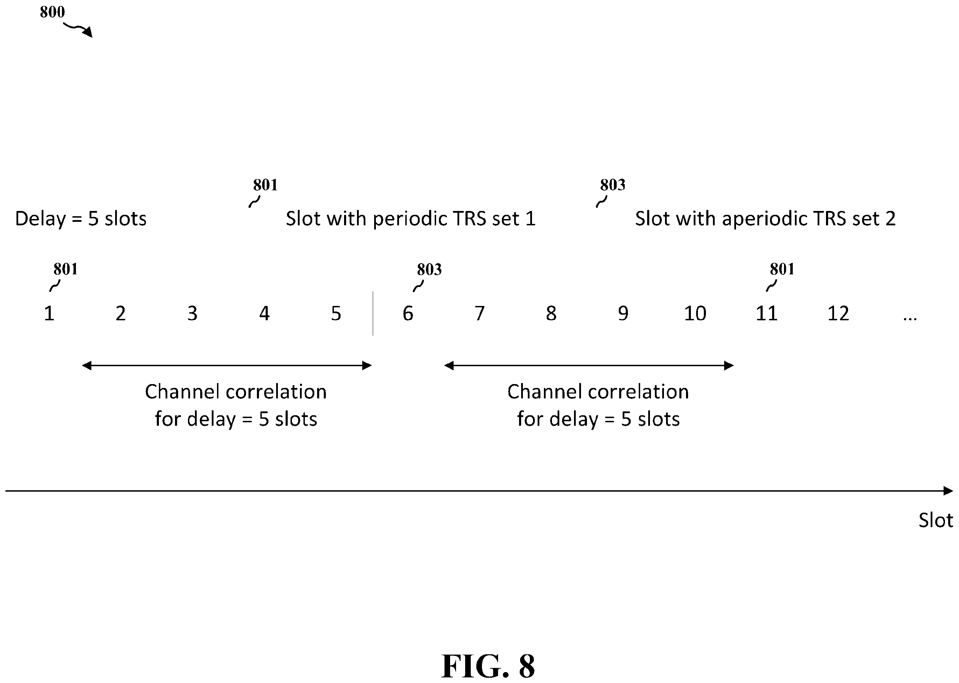

FIG. 8 is a diagram 800 illustrating a joint periodic and aperiodic TRS structure based on periodic TRSs and aperiodic TRSs from the network entity where the network entity configures a delay between bursts from the periodic TRSs and the aperiodic TRSs for the UE to generate an inter-burst channel correlation report. The periodic TRS set includes periodic TRSs 801 at slots 1 and 11 with a periodicity of 10 slots. The aperiodic TRS set includes an aperiodic TRS 803 at slot 6. The network entity configures a delay of 5 slots between the periodic TRS 801 of slot 1 and the aperiodic TRS 803 of slot 6, and a delay of 5 slots between the aperiodic TRS 803 of slot 6 and the aperiodic TRS 801 of slot 11. The UE may measure the inter-burst channel correlation of the joint periodic and aperiodic TRS sets based on the configured delays.

In another aspect, the UE may measure and report a channel correlation report based on any combinations of joint periodic TRSs, aperiodic TRSs, and semi-persistent TRSs. The network entity may transmit at least one set of periodic TRSs, at least one set of aperiodic TRSs, and at least one set of semi-persistent TRSs for the channel correlation measurement and report. The above discussions on measuring and reporting the channel correlation based on the joint periodic and aperiodic TRS sets may be extended to any combinations of joint periodic, aperiodic, and semi-persistent TRS sets.

In another aspect, the network entity may dynamically update the configuration parameters for periodic TRS. The network entity may configure the UE based on a RRC parameter (e.g., *trs-Info*, of a non-zero power (*NZP*)*-CSI-RS-ResourceSet*) to indicate that CMRs such as the CSI-RS resources are for transmitting periodic TRSs. When the CSI report configuration (e.g., *CSI-ReportConfig* parameter structure) configures the UE to report a channel correlation based on periodic TRSs, the network entity may configure the report quantity parameter *reportQuantity* to only indicate a channel correlation report (e.g., '*timeDomainChannelProperty*')*.* The network entity may refrain from configuring the report quantity parameter *reportQuantity* to indicate a value other than a channel correlation report (e.g., '*timeDomainChannelProperty*') when it configures the periodic TRS as the CMR in a CSI report configuration. In the event the UE receives the CSI report configuration with periodic TRS as CMR and the report quality parameter *reportQuantity* is set to a value other than a channel correlation report (e.g., '*timeDomainChannelProperty'*)*,* the UE 104 may determine that it receives an error configuration and may transmit a RRC reconfiguration request.

In some implementations, the network entity may transmit a MAC CE to update parameters of the TRS resources for one or more periodic TRS sets such as the periodicity, slot offset and/or TCI state. The MAC CE may indicate other parameters, including at least one of: serving cell index, which indicates the serving cell for the periodic TRS set; downlink bandwidth part index, which indicates the downlink bandwidth part index for the periodic TRS set; TRS resource and/or resource set index, which indicates the target TRS resource and/or TRS resource set to apply the indicated parameters; periodicity or periodicity and slot offset, which indicates the periodicity and slot offset for the indicated TRS resources or TRS resource set; TCI state index, which indicates the TCI state for the indicated TRS resource or TRS resource set. In some implementations, the network entity may refrain from performing dynamic update of the parameters for a periodic TRS set when the network entity did not configure the periodic TRS set for a channel correlation report.

In some implementations, the network entity may update the parameters of the TRS resources of the periodic TRS sets via a MAC CE based on the capabilities of the UE. For example, the UE may report the UE capabilities indicating at least one of the following elements: whether it supports MAC CE based periodicity and/or slot offset update for a periodic TRS set; whether it supports MAC CE based TCI state update for a periodic TRS set, etc.

In some implementations, the network entity may refrain from configuring the delay(s) for the UE to measure and report the channel correlation report where the delays are not a multiple of the periodicity of the periodic TRS set. For example, the network entity may configure the delay(s) for inter-burst channel correlation as a multiple of the periodicity of the TRS set. The delay for the inter-burst channel correlation may be K multiples of the periodicity, where K is an integer greater than 1. Alternatively, when the configured delay(s) are not a multiple of the periodicity of the periodic TRS set, the UE may not report the channel correlation or may report a default channel correlation, e.g., 0. The network entity may configure the delay(s) by RRC signaling, MAC CE or DCI.

In some implementations, the network entity may transmit the MAC CE based on a cell radio network temporary identifier (C-RNTI). After X millisecond, slots, symbols, etc., from when the UE transmits the last symbol of the Physical Uplink Control Channel (PUCCH) or the Physical Uplink Shared Channel (PUSCH) with the acknowledgement (ACK) for the MAC CE, or from when the UE receives the last symbol of the Physical Downlink Shared Channel (PDSCH) with the MAC CE, the UE may apply the new parameter(s) for the indicated TRS set. In one implementation, X may be predefined, e.g., X=3 millisecond. In another implementation, the network entity may configure X by a RRC signaling, MAC CE or DCI. In another implementation, the UE may report X to the network entity as part of the reporting of UE capability.

In some implementations, the network entity may transmit the MAC CE based on a radio network temporary identifier (RNTI). The network entity may configure the RNTI by a RRC signaling. The network entity may configure the same RNTI for a group of UEs. After Y millisecond, slots, symbols, etc., from when the UE transmits the last symbol of the PUCCH or the PUSCH with the ACK for the MAC CE, or from when the UE receives the last symbol of the PDSCH with the MAC CE, the UE may apply the new parameter(s) for the indicated TRS set. In one implementation, Y may be predefined, e.g., Y=28 symbols. In another implementation, the network entity may configure Y by a RRC signaling, MAC CE or DCI. In another implementation, the UE may report Y to the network entity as part of the reporting of UE capability.

In some implementations, the network entity may transmit a DCI to update parameters of the TRS resources for one or more periodic TRS sets such as the periodicity, slot offset and/or TCI state. The DCI may indicate other parameters, including at least one of: serving cell index, which indicates the serving cell for the periodic TRS set; downlink bandwidth part index, which indicates the downlink bandwidth part index for the periodic TRS set; TRS resource and/or resource set index, which indicates the target TRS resource and/or TRS resource set to apply the indicated parameters; periodicity or periodicity and slot offset, which indicates the periodicity and slot offset for the indicated TRS resources or TRS resource set; TCI state index, which indicates the TCI state for the indicated TRS resource or TRS resource set. In some implementations, the network entity may refrain from performing dynamic update of the parameters for a periodic TRS set when the network entity did not configure the periodic TRS set for a channel correlation report.

In some implementations, the network entity may update the parameters of the TRS resources of the periodic TRS sets via a DCI based on the capabilities of the UE. For example, the UE may report the UE capabilities indicating at least one of the following elements: whether it supports DCI based periodicity and/or slot offset update for a periodic TRS set; whether it supports DCI based TCI state update for a periodic TRS set, etc.

In some implementations, the network entity may refrain from configuring the delay(s) for the UE to measure and report the channel correlation report where the delays are not a multiple of the periodicity of the periodic TRS set. For example, the network entity may configure the delay(s) for inter-burst channel correlation as a multiple of the periodicity of the TRS set. The delay for the inter-burst channel correlation may be K multiples of the periodicity, where K is an integer greater than 1. Alternatively, when the configured delay(s) are not a multiple of the periodicity of the periodic TRS set, the UE may not report the channel correlation or may report a default channel correlation, e.g., 0. The network entity may configure the delay(s) by RRC signaling, MAC CE or DCI.

In some implementations, the network entity may transmit the DCI based on a C-RNTI. In some implementations, the network entity may transmit the DCI based a RNTI. The network entity may configure the RNTI by a RRC signaling. The network entity may configure the same RNTI for a group of UEs. In some implementations, the UE may transmit an ACK for the DCI to the network entity, where the DCI also indicates the PUCCH resource for carrying the ACK and the slot offset of the PUCCH resource.

In some implementations, after Q millisecond, slots, symbols, etc., from when the UE transmits the last symbol of the PUCCH or the PUSCH with the ACK for the DCI, the UE may apply the new parameter(s) for the indicated TRS set. In one implementation, Q may be predefined, e.g., Q=3 millisecond. In another implementation, the network entity may configure Q by a RRC signaling, MAC CE or DCI. In another implementation, the UE may report Q to the network entity as part of the reporting of UE capability.

In some implementations, after P millisecond, slots, symbols, etc., from when the UE receives the last symbol of the DCI, the UE may apply the new parameter(s) for the indicated TRS set. In one implementation, P may be predefined, e.g., P=28 symbols. In another implementation, the network entity may configure P by a RRC signaling, MAC CE or DCI. In another implementation, the UE may report P to the network entity as part of the reporting of UE capability.

In another aspect, the UE may measure and report a channel correlation report based on semi-persistent TRSs. The network entity may configure at least one set of semi-persistent TRSs for the channel correlation measurement and report. The network entity may activate and/or deactivate the one or more sets of semi-persistent TRSs by a MAC CE, such as in operation 306 of FIG. 3.

The MAC CE may also indicate the parameters of the TRS resources for the set(s) of semi-persistent TRSs, including at least one of the following: serving cell index, which indicates the serving cell for the semi-persistent TRS set(s); downlink bandwidth part index, which indicates the downlink bandwidth part index for the semi-persistent TRS set(s); TRS resource and/or resource set index, which indicates the target semi-persistent TRS resource(s) and/or TRS resource set(s) to activate and apply the indicated parameters, or to deactivate the indicated parameters; periodicity or periodicity and slot offset, which indicates the periodicity and slot offset for the indicated semi-persistent TRS resource(s) or TRS resource set(s); TCI state index, which indicates the TCI state for the indicated semi-persistent TRS resource(s) or TRS resource set(s).

In some implementations, the network entity may configure the semi-persistent TRSs for channel correlation report only. For example, the network entity may refrain from indicating semi-persistent TRSs as the source reference signal for QCL indication in a TCI state. Instead, the network entity may indicate the source reference signal for QCL indication in a TCI state based on periodic TRSs or aperiodic TRSs. In some implementations, the network entity may configure periodic TRSs as the QCL source for the semi-persistent TRSs. The network entity may configure the semi-persistent TRSs as a QCL source in a TCI state for another signal, e.g., PDSCH or PDCCH.

In some implementations, the network entity may configure the parameters of the TRS resources for the semi-persistent TRS set(s) via a MAC CE based on the capabilities of the UE. For example, the UE may report the UE capabilities indicating at least one of the following elements: whether it supports semi-persistent TRS for measuring and reporting a channel correlation report; the supported minimum or maximum periodicity for the semi-persistent TRSs, etc.

In some implementations, the network entity may refrain from configuring the delay(s) for the UE to measure and report the channel correlation report where the delays are not a multiple of the periodicity of the semi-persistent TRSs. For example, the network entity may configure the delay(s) for inter-burst channel correlation as a multiple of the periodicity of the semi-persistent TRSs. The delay for the inter-burst channel correlation may be K multiples of the periodicity of the semi-persistent TRSs, where K is an integer greater than 1. Alternatively, when the configured delay(s) are not a multiple of the periodicity of the semi-persistent TRSs, the UE may not report the channel correlation or may report a default channel correlation, e.g., 0. The network entity may configure the delay(s) by RRC signaling, MAC CE or DCI.

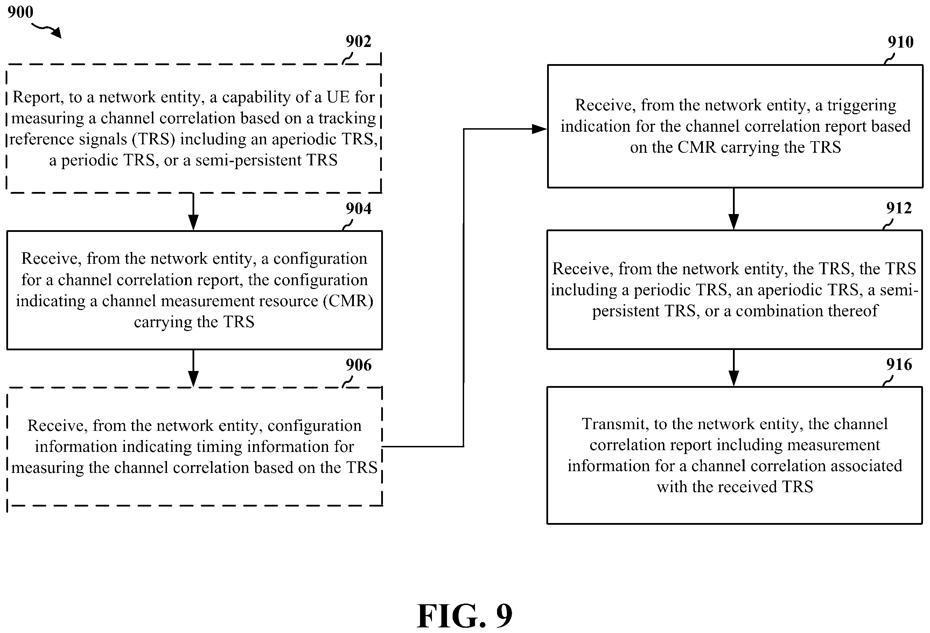

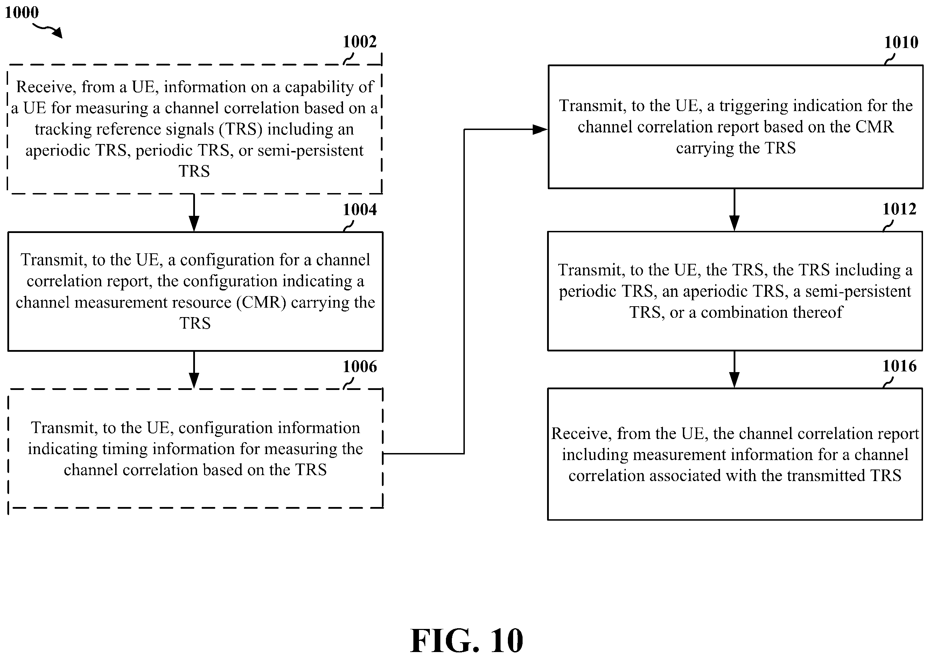

FIGs. 9-10 show methods for implementing one or more aspects of FIGs. 3-8. In particular, FIG. 9 shows an implementation by the UE 102 of the one or more aspects of FIGs. 3-8. FIG. 10 shows an implementation by the network entity 104 of the one or more aspects of FIGs. 3-8.

FIG. 9 illustrates a flowchart 900 of a method of wireless communication at a UE. With reference to FIGs. 1, 3 and 11, the method may be performed by the UE 102, the UE apparatus 1102, etc., which may include the memory 1126', 1106', 1116, and which may correspond to the entire UE 102 or the entire UE apparatus 1102, or a component of the UE 102 or the UE apparatus 1102, such as the wireless baseband processor 1126 and/or the application processor 1106.

The UE reports 902, to a network entity, a capability of a UE for measuring a channel correlation based on a TRS including an aperiodic TRS, periodic TRS, or semi-persistent TRS. For example, referring to FIG. 3, the UE 102 transmits 302, to the network entity 104, UE capability on aperiodic and/or periodic and/or semi-persistent TRS-based channel correlation report. In one implementation, the UE capability information may include the capability for the UE 102 to receive an update to one or more parameters of the periodic TRS from the network entity 104.

The UE receives 904, from the network entity, a configuration for a channel correlation report, the configuration indicating a channel measurement resource (CMR) carrying the TRS. For example, referring to FIG. 3, the UE 102 receives 304, from the network entity 104, RRC signaling for configuring at least one CSI report configuration for the UE 102 to report the channel correlation based on at least one set of aperiodic TRS and/or periodic TRS and/or semi-persistent TRS.

The UE receives 906, from the network entity, configuration information indicating timing information for measuring the channel correlation based on the TRS. For example, referring to FIG. 3, the UE 102 receives 306, from the network entity 104, MAC CE or DCI for updating the periodicity and/or TCI state for the periodic TRS, or MAC CE for activating the semi-persistent TRS.

The UE receives 910, from the network entity, a triggering indication for the channel correlation report based on the CMR carrying the TRS. For example, referring to FIG. 3, the UE 102 receives 310, from the network entity 104, DCI for triggering the channel correlation report.

The UE receives 912, from the network entity, the TRS, the TRS including a periodic TRS, an aperiodic TRS, a semi-persistent TRS, or a combination thereof. For example, referring to FIG. 3, the UE 102 receives 308, from the network entity 104, one or more sets of periodic TRSs or semi-persistent TRSs that the UE will measure for the channel correlation report as configured by the CSI report configuration. Referring also to FIG. 3, the UE 102 may receive 312, from the network entity 104, one or more sets of aperiodic TRSs in a single burst or in multiple bursts that the UE will measure for the channel correlation report as configured by the CSI report configuration. FIGs. 4-8 show various configurations for the one or more sets of periodic TRSs and/or aperiodic TRSs.

The UE transmits 916, to the network entity, the channel correlation report including measurement information for a channel correlation associated with the TRS, the TRS including a periodic TRS, an aperiodic TRS, a semi-persistent TRS, or a combination thereof. For example, referring to FIG. 3, the UE 102 transmits 316, to the network entity 104, PUSCH with channel correlation report. Referring also to FIG. 3, the UE 102 may measure and generate 314 the channel correlation report based on the received aperiodic and/or periodic TRS set(s) and/or semi-persistent TRS sets(s).

FIG. 10 is a flowchart 1000 of a method of wireless communication at a network entity. With reference to FIGs. 1, 3, and 12, the method may be performed by one or more network entities 104, which may correspond to a base station or a unit of the base station, such as the RU 106, the DU 108, the CU 110, an RU processor 1206, a DU processor 1226, a CU processor 1246, etc. The one or more network entities 104 may include memory 1206', 1026', and 1046', and may correspond to an entirety of the one or more network entities 104, or a component of the one or more network entities 104, such as the RU processor 1206, the DU processor 1226, or the CU processor 1246.

The network entity receives 1002, from a UE, information on a capability of a UE for measuring a channel correlation based on a tracking reference signals (TRS) including an aperiodic TRS, periodic TRS, or semi-persistent TRS. For example, referring to FIG. 3, the network entity 104 receives 302, from the UE 102, UE capability on aperiodic and/or periodic and/or semi-persistent TRS-based channel correlation report. In one implementation, the UE capability information may include the capability for the UE 102 to receive an update to one or more parameters of the periodic TRS from the network entity 104.

The network entity transmits 1004, to the UE, a configuration for a channel correlation report, the configuration indicating a channel measurement resource (CMR) carrying the TRS. For example, referring to FIG. 3, the network entity 104 transmit 304, to the UE 102, RRC signaling for configuring at least one CSI report configuration for the 102 UE to report the channel correlation based on at least one set of aperiodic TRS and/or periodic TRS and/or semi-persistent TRS.

The network entity transmits 1006, to the UE, configuration information indicating timing information for measuring the channel correlation based on the TRS. For example, referring to FIG. 3, the network entity 104 transmits 306, to the UE 102, MAC CE or DCI for updating the periodicity and/or TCI state for the periodic TRS, or MAC CE for activating the semi-persistent TRS.

The network entity transmits 1010, to the UE, a triggering indication for the channel correlation report based on the CMR carrying the TRS. For example, referring to FIG. 3, the network entity 104 transmits 310, to the UE 102, DCI for triggering the channel correlation report.

The network entity transmits 1012, to the UE, the TRS, the TRS including a periodic TRS, an aperiodic TRS, a semi-persistent TRS, or a combination thereof. For example, referring to FIG. 3, the network entity 104 transmits 308, to the UE 102, one or more sets of periodic TRSs or semi-persistent TRSs that the UE will measure for the channel correlation report as configured by the CSI report configuration. Referring also to FIG. 3, the network entity 104 may transmit 312, to the UE 102, one or more sets of aperiodic TRSs in a single burst or in multiple bursts that the UE will measure for the channel correlation report as configured by the CSI report configuration. FIGs. 4-8 show various configurations for the one or more sets of periodic TRSs and/or aperiodic TRSs.

The network entity receives 1016, from the UE, the channel correlation report including measurement information for a channel correlation associated with the TRS, the TRS including a periodic TRS, an aperiodic TRS, a semi-persistent TRS, or a combination thereof. For example, referring to FIG. 3, the network entity 104 receives 316, from the UE 102, PUSCH with channel correlation report. The channel correlation report may be based on the aperiodic and/or periodic TRS set(s) and/or semi-persistent TRS sets(s).

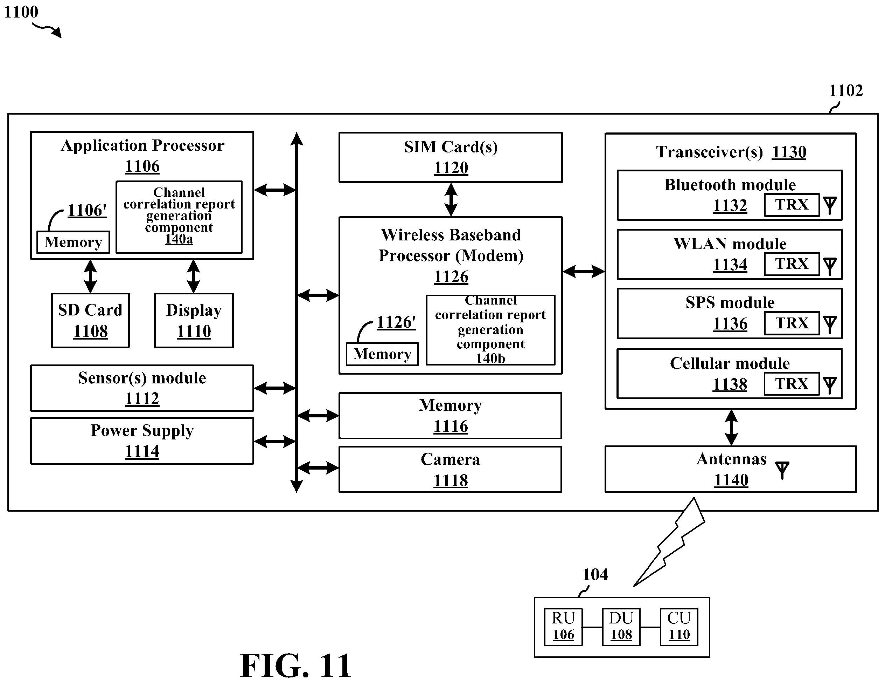

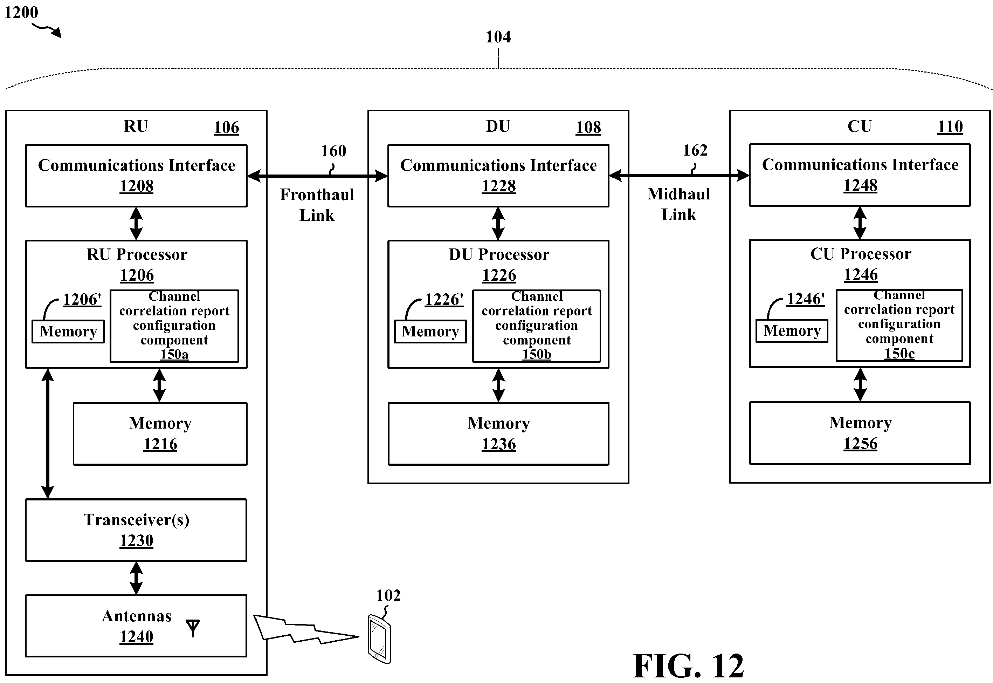

A UE apparatus 1102, as described in FIG. 11, may perform the method of flowchart 900. The one or more network entities 104, as described in FIG. 12, may perform the method of flowchart 1000.

FIG. 11 is a diagram 1100 illustrating an example of a hardware implementation for a UE apparatus 1102. The UE apparatus 1102 may be the UE 102, a component of the UE 102, or may implement UE functionality. The UE apparatus 1102 may include an application processor 1106, which may have on-chip memory 1106'. In examples, the application processor 1106 may be coupled to a secure digital (SD) card 1108 and/or a display 1110. The application processor 1106 may also be coupled to a sensor(s) module 1112, a power supply 1114, an additional module of memory 1116, a camera 1118, and/or other related components. For example, the sensor(s) module 1112 may control a barometric pressure sensor/altimeter, a motion sensor such as an inertial management unit (IMU), a gyroscope, accelerometer(s), a light detection and ranging (LIDAR) device, a radio-assisted detection and ranging (RADAR) device, a sound navigation and ranging (SONAR) device, a magnetometer, an audio device, and/or other technologies used for positioning.

The UE apparatus 1102 may further include a wireless baseband processor 1126, which may be referred to as a modem. The wireless baseband processor 1126 may have on-chip memory 1126'. Along with, and similar to, the application processor 1106, the wireless baseband processor 1126 may also be coupled to the sensor(s) module 1112, the power supply 1114, the additional module of memory 1116, the camera 1118, and/or other related components. The wireless baseband processor 1126 may be additionally coupled to one or more subscriber identity module (SIM) card(s) 1120 and/or one or more transceivers 1130 (e.g., wireless RF transceivers).

Within the one or more transceivers 1130, the UE apparatus 1102 may include a Bluetooth module 1132, a WLAN module 1134, an SPS module 1136 (e.g., GNSS module), and/or a cellular module 1138. The Bluetooth module 1132, the WLAN module 1134, the SPS module 1136, and the cellular module 1138 may each include an on-chip transceiver (TRX), or in some cases, just a transmitter (TX) or just a receiver (RX). The Bluetooth module 1132, the WLAN module 1134, the SPS module 1136, and the cellular module 1138 may each include dedicated antennas and/or utilize antennas 1140 for communication with one or more other nodes. For example, the UE apparatus 1102 can communicate through the transceiver(s) 1130 via the antennas 1140 with another UE (e.g., sidelink communication) and/or with a network entity 104 (e.g., uplink/downlink communication), where the network entity 104 may correspond to a base station or a unit of the base station, such as the RU 106, the DU 108, or the CU 110.

The wireless baseband processor 1126 and the application processor 1106 may each include a computer-readable medium / memory 1126', 1106', respectively. The additional module of memory 1116 may also be considered a computer-readable medium / memory. Each computer-readable medium / memory 1126', 1106', 1116 may be non-transitory. The wireless baseband processor 1126 and the application processor 1106 may each be responsible for general processing, including execution of software stored on the computer-readable medium / memory 1126', 1106', 1116. The software, when executed by the wireless baseband processor 1126 / application processor 1106, causes the wireless baseband processor 1126 / application processor 1106 to perform the various functions described herein. The computer-readable medium / memory may also be used for storing data that is manipulated by the wireless baseband processor 1126 / application processor 1106 when executing the software. The wireless baseband processor 1126 / application processor 1106 may be a component of the UE 102. The UE apparatus 1102 may be a processor chip (e.g., modem and/or application) and include just the wireless baseband processor 1126 and/or the application processor 1106. In other examples, the UE apparatus 1102 may be the entire UE 102 and include the additional modules of the apparatus 1102.

As discussed in FIG. 1 and implemented with respect to FIG. 9, the channel correlation report generation component 140 is configured to receives, from a network entity, a configuration for a channel correlation report, the configuration indicating a channel measurement resource (CMR) carrying the TRS; receive, from the network entity, a triggering indication for the channel correlation report based on the CMR carrying the TRS; and transmit, to the network entity, the channel correlation report including measurement information for a channel correlation associated with the TRS, the TRS including a periodic TRS, an aperiodic TRS, a semi-persistent TRS, or a combination thereof.

The channel correlation report generation component 140 may be within the application processor 1106 (e.g., at 140a), the wireless baseband processor 1126 (e.g., at 140b), or both the application processor 1106 and the wireless baseband processor 1126. The channel correlation report generation component 140a-140b may be one or more hardware components specifically configured to carry out the stated processes/algorithm, implemented by one or more processors configured to perform the stated processes/algorithm, stored within a computer-readable medium for implementation by the one or more processors, or a combination thereof.

FIG. 12 is a diagram 1200 illustrating an example of a hardware implementation for one or more network entities 104. The one or more network entities 104 may be a base station, a component of a base station, or may implement base station functionality. The one or more network entities 104 may include, or may correspond to, at least one of the RU 106, the DU, 108, or the CU 110. The CU 110 may include a CU processor 1246, which may have on-chip memory 1246'. In some aspects, the CU 110 may further include an additional module of memory 1256 and/or a communications interface 1248, both of which may be coupled to the CU processor 1246. The CU 110 can communicate with the DU 108 through a midhaul link 162, such as an F1 interface between the communications interface 1248 of the CU 110 and a communications interface 1228 of the DU 108.

The DU 108 may include a DU processor 1226, which may have on-chip memory 1226'. In some aspects, the DU 108 may further include an additional module of memory 1236 and/or the communications interface 1228, both of which may be coupled to the DU processor 1226. The DU 108 can communicate with the RU 106 through a fronthaul link 160 between the communications interface 1228 of the DU 108 and a communications interface 1208 of the RU 106.

The RU 106 may include an RU processor 1206, which may have on-chip memory 1206'. In some aspects, the RU 106 may further include an additional module of memory 1216, the communications interface 1208, and one or more transceivers 1230, all of which may be coupled to the RU processor 1206. The RU 106 may further include antennas 1240, which may be coupled to the one or more transceivers 1230, such that the RU 106 can communicate through the one or more transceivers 1230 via the antennas 1240 with the UE 102.

The on-chip memory 1206', 1226', 1246' and the additional modules of memory 1216, 1236, 1256 may each be considered a computer-readable medium / memory. Each computer-readable medium / memory may be non-transitory. Each of the processors 1206, 1226, 1246 is responsible for general processing, including execution of software stored on the computer-readable medium / memory. The software, when executed by the corresponding processor(s) 1206, 1226, 1246 causes the processor(s) 1206, 1226, 1246 to perform the various functions described herein. The computer-readable medium / memory may also be used for storing data that is manipulated by the processor(s) 1206, 1226, 1246 when executing the software. In examples, the channel correlation report configuration component 150 may sit at any of the one or more network entities 104, such as at the CU 110; both the CU 110 and the DU 108; each of the CU 110, the DU 108, and the RU 106; the DU 108; both the DU 108 and the RU 106; or the RU 106.

As discussed in FIG. 1 and implemented with respect to FIG. 10, the channel correlation report configuration component 150 is configured to transmit, to a UE, , a configuration for a channel correlation report, the configuration indicating a channel measurement resource (CMR) carrying the TRS; transmit, to the UE, a triggering indication for the channel correlation report based on the CMR carrying the TRS; and to receive, from the UE, the channel correlation report including measurement information for a channel correlation associated with the TRS, the TRS including a periodic TRS, an aperiodic TRS, a semi-persistent TRS, or a combination thereof.

The channel correlation report configuration component 150 may be within one or more processors of the one or more network entities 104, such as the RU processor 1206 (e.g., at 150a), the DU processor 1226 (e.g., at 150b), and/or the CU processor 1246 (e.g., at 150c). The channel correlation report configuration component 150a-150c may be one or more hardware components specifically configured to carry out the stated processes/algorithm, implemented by one or more processors 1206, 1226, 1246 configured to perform the stated processes/algorithm, stored within a computer-readable medium for implementation by the one or more processors 1206, 1226, 1246, or a combination thereof.

The specific order or hierarchy of blocks in the processes and flowcharts disclosed herein is an illustration of example approaches. Hence, the specific order or hierarchy of blocks in the processes and flowcharts may be rearranged. Some blocks may also be combined or deleted. Dashed lines may indicate optional elements of the diagrams. The accompanying method claims present elements of the various blocks in an example order, and are not limited to the specific order or hierarchy presented in the claims, processes, and flowcharts.

The detailed description set forth herein describes various configurations in connection with the drawings and does not represent the only configurations in which the concepts described herein may be practiced. The detailed description includes specific details for the purpose of providing a thorough explanation of various concepts. However, these concepts may be practiced without these specific details. In some instances, well known structures and components are shown in block diagram form in order to avoid obscuring such concepts.

Aspects of wireless communication systems, such as telecommunication systems, are presented with reference to various apparatuses and methods. These apparatuses and methods are described in the following detailed description and are illustrated in the accompanying drawings by various blocks, components, circuits, processes, call flows, systems, algorithms, etc. (collectively referred to as "elements"). These elements may be implemented using electronic hardware, computer software, or combinations thereof. Whether such elements are implemented as hardware or software depends upon the particular application and design constraints imposed on the overall system.

An element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems-on-chip (SoC), baseband processors, field programmable gate arrays (FPGAs), programmable logic devices (PLDs), state machines, gated logic, discrete hardware circuits, and other similar hardware configured to perform the various functionality described throughout this disclosure. One or more processors in the processing system may execute software, which may be referred to as software, firmware, middleware, microcode, hardware description language, or otherwise. Software shall be construed broadly to mean instructions, instruction sets, code, code segments, program code, programs, subprograms, software components, applications, software applications, software packages, routines, subroutines, objects, executables, threads of execution, procedures, functions, or any combination thereof.

If the functionality described herein is implemented in software, the functions may be stored on, or encoded as, one or more instructions or code on a computer-readable medium, such as a non-transitory computer-readable storage medium. Computer-readable media includes computer storage media and can include a random-access memory (RAM), a read-only memory (ROM), an electrically erasable programmable ROM (EEPROM), optical disk storage, magnetic disk storage, other magnetic storage devices, combinations of these types of computer-readable media, or any other medium that can be used to store computer executable code in the form of instructions or data structures that can be accessed by a computer. Storage media may be any available media that can be accessed by a computer.

Aspects, implementations, and/or use cases described herein may be implemented across many differing platform types, devices, systems, shapes, sizes, and packaging arrangements. For example, the aspects, implementations, and/or use cases may come about via integrated chip implementations and other non-module-component based devices, such as end-user devices, vehicles, communication devices, computing devices, industrial equipment, retail/purchasing devices, medical devices, artificial intelligence (AI)-enabled devices, machine learning (ML)-enabled devices, etc. The aspects, implementations, and/or use cases may range from chip-level or modular components to non-modular or non-chip-level implementations, and further to aggregate, distributed, or original equipment manufacturer (OEM) devices or systems incorporating one or more techniques described herein.

Devices incorporating the aspects and features described herein may also include additional components and features for the implementation and practice of the claimed and described aspects and features. For example, transmission and reception of wireless signals necessarily includes a number of components for analog and digital purposes, such as hardware components, antennas, RF-chains, power amplifiers, modulators, buffers, processor(s), interleavers, adders/summers, etc. Techniques described herein may be practiced in a wide variety of devices, chip-level components, systems, distributed arrangements, aggregated or disaggregated components, end-user devices, etc., of varying configurations.

The description herein is provided to enable a person skilled in the art to practice the various aspects described herein. Various modifications to these aspects will be readily apparent to those skilled in the art, and the generic principles defined herein may be applied to other aspects. Thus, the claims are not limited to the aspects described herein, but are to be interpreted in view of the full scope of the present disclosure consistent with the language of the claims.

Reference to an element in the singular does not mean "one and only one" unless specifically stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The terms "may", "might", and "can", as used in this disclosure, often carry certain connotations. For example, "may" refers to a permissible feature that may or may not occur, "might" refers to a feature that probably occurs, and "can" refers to a capability (e.g., capable of). The phrase "For example" often carries a similar connotation to "may" and, therefore, "may" is sometimes excluded from sentences that include "for example" or other similar phrases.

Unless specifically stated otherwise, the term "some" refers to one or more. Combinations such as "at least one of A, B, or C" or "one or more of A, B, or C" include any combination of A, B, and/or C, such as A and B, A and C, B and C, or A and B and C, and may include multiples of A, multiples of B, and/or multiples of C, or may include A only, B only, or C only. Sets should be interpreted as a set of elements where the elements number one or more.

Unless otherwise specifically indicated, ordinal terms such as "first" and "second" do not necessarily imply an order in time, sequence, numerical value, etc., but are used to distinguish between different instances of a term or phrase that follows each ordinal term. Reference numbers, as used in the specification and figures, are sometimes cross-referenced among drawings to denote same or similar features. A feature that is exactly the same in multiple drawings may be labeled with the same reference number in the multiple drawings. A feature that is similar among the multiple drawings, but not exactly the same, may be labeled with reference numbers that have different leading numbers, but have one or more of the same trailing numbers (e.g., 206, 306, 406, etc., may refer to similar features in the drawings). Sometimes an "X" is used to universally denote multiple variations of a feature. For instance, "X06" can universally refer to all reference numbers that end in "06" (e.g., 206, 306, 406, etc.).

Structural and functional equivalents to elements of the various aspects described throughout this disclosure that are known or later come to be known to those of ordinary skill in the art are expressly incorporated herein by reference and are encompassed by the claims. The words "module," "mechanism," "element," "device," and the like may not be a substitute for the word "means." As such, no claim element is to be construed as a means plus function unless the element is expressly recited using the phrase "means for." As used herein, the phrase "based on" shall not be construed as a reference to a closed set of information, one or more conditions, one or more factors, or the like. In other words, the phrase "based on A", where "A" may be information, a condition, a factor, or the like, shall be construed as "based at least on A" unless specifically recited differently.

## Claims

1. A method of wireless communication at a user equipment, UE, (102), comprising:
receiving (904), from a network entity (104), a configuration for a channel correlation report, the configuration indicating a channel measurement resource, CMR, for a tracking reference signal, TRS;
receiving (910), from the network entity (104), a triggering indication for the channel correlation report based on the CMR for the TRS;
receiving (912), from the network entity (104), the TRS, the TRS including at least one of: a periodic TRS, an aperiodic TRS, or a semi-persistent TRS; and
transmitting (916), to the network entity (104), the channel correlation report including channel correlation information associated with the TRS.

2. The method of claim 1, further comprising:
receiving (906), from the network entity (104), configuration information indicating a periodicity of the periodic TRS, wherein the periodic TRS comprises a channel state information reference signal, CSI-RS, for time or frequency tracking¹.
¹ Original claim 2

3. The method of any of claims 1-2, wherein the configuration indicates a delay for measuring the periodic TRS for the channel correlation information².
² Paragraphs [0040] and [0074]

4. The method of any of claims 2-3, wherein the configuration information further configures common parameters including at least one of: a transmission configuration indicator, TCI, state, bandwidth, or subcarriers for TRS resources for the periodic TRS³.
³ Paragraph [0069]

5. The method of any of claims 2-4, wherein the configuration information further configures a reportQuantity parameter to indicate a value of 'timeDomainChannelProperty' for the channel correlation report based on the periodic TRS.

6. The method of any of claims 1-5, wherein the TRS includes a plurality of sets of periodic TRSs, and wherein the channel correlation report includes a plurality of channel correlation information corresponding to the plurality of sets of periodic TRSs.

7. The method of any of claims 1-6, wherein the receiving the TRS comprises receiving the periodic TRS, and wherein⁴ channel correlation information is based on the periodic TRS.
⁴ Clarifying amendments

8. The method of any of claims 1-7, further comprising:
reporting (902), to the network entity (104), capabilities of the UE (102) for measuring the channel correlation information based on at least one of: the periodic TRS, the aperiodic TRS, or the semi-persistent TRS.

9. The method of any of claims 2-8, wherein the configuration information comprises an update to a parameter of the periodic TRS including at least one of: the periodicity, an offset, or a transmission configuration indication, TCI, state.

10. The method of claim 9, further comprising:
reporting (902), to the network entity (104), capabilities of the UE (102) for receiving the update to the parameter of the periodic TRS.

11. The method of any of claims 8-10, wherein the configuration for the channel correlation report is based on the capabilities of the UE (102).

12. A method of wireless communication at a network entity (104), comprising:
transmitting (1004), to a user equipment, UE, (102), a configuration for a channel correlation report, the configuration indicating a channel measurement resource, CMR, for a tracking reference signal, TRS;
transmitting (1010), to the UE (102), a triggering indication for the channel correlation report based on the CMR for the TRS;
transmitting (1012), to the UE (102), the TRS, the TRS including at least one of: a periodic TRS, an aperiodic TRS, or a semi-persistent TRS; and
receiving (1016), from the UE (102), the channel correlation report including channel correlation information associated with the TRS.

13. The method of claim 12, further comprising:
refraining from configuring a reportQuantity parameter to indicate a value other than 'timeDomainChannelProperty' for the channel correlation report based on the periodic TRS.

14. The method of any of claims 12-13, wherein the transmitting the TRS comprises transmitting the periodic TRS, the method further comprising:
transmitting (1006), to the UE (102), configuration information indicating a periodicity of the periodic TRS, wherein the periodic TRS comprises a channel state information reference signal, CSI-RS, for time or frequency tracking, and wherein the configuration information further configures common parameters including at least one of: a transmission configuration indicator, TCI, state, bandwidth, or subcarriers for TRS resources for the periodic TRS⁵.
⁵ Clarifying amendments

15. An apparatus for wireless communication comprising a memory, a transceiver, and a processor coupled to the memory and the transceiver, the apparatus being configured to implement a method as in any of claims 1-14.

## Patentansprüche

1. Verfahren zur drahtlosen Kommunikation an einer Benutzerausrüstung, UE, (102), umfassend:
Empfangen (904), von einer Netzwerkentität (104), einer Konfiguration für einen Kanalkorrelationsbericht, wobei die Konfiguration eine Kanalmessressource, CMR, für ein Nachführungsreferenzsignal, TRS, angibt;
Empfangen (910), von der Netzwerkentität (104), einer Auslöseindikation für den Kanalkorrelationsbericht basierend auf der CMR für das TRS;
Empfangen (912), von der Netzwerkentität (104), des TRS, wobei das TRS mindestens eines von einem periodischen TRS, einem aperiodischen TRS oder einem semi-persistenten TRS beinhaltet; und
Übertragen (916), an die Netzwerkentität (104), des Kanalkorrelationsberichts, einschließlich Kanalkorrelationsinformationen, die dem TRS zugeordnet sind.

2. Verfahren nach Anspruch 1, ferner umfassend:
Empfangen (906), von der Netzwerkentität (104), von Konfigurationsinformationen, die eine Periodizität des periodischen TRS angeben, wobei das periodische TRS ein Kanalzustandsinformationsreferenzsignal, CSI-RS, zur Zeitoder Frequenznachführung umfasst¹.

3. Verfahren nach einem der Ansprüche 1-2, wobei die Konfiguration eine Verzögerung zum Messen des periodischen TRS für die Kanalkorrelationsinformationen angibt².

4. Verfahren nach einem der Ansprüche 2-3, wobei die Konfigurationsinformationen ferner gemeinsame Parameter konfigurieren, einschließlich mindestens eines von: einem Übertragungskonfigurationsindikator-, TCI-, Zustand, einer Bandbreite oder Unterträgern für TRS-Ressourcen für das periodische TRS³.

5. Verfahren nach einem der Ansprüche 2-4, wobei die Konfigurationsinformationen ferner einen reportQuantity-Parameter konfigurieren, um einen Wert von "timeDomainChannelProperty" für den Kanalkorrelationsbericht basierend auf dem periodischen TRS anzugeben.

6. Verfahren nach einem der Ansprüche 1-5, wobei das TRS eine Mehrzahl von Sätzen von periodischen TRS beinhaltet, und wobei der Kanalkorrelationsbericht eine Mehrzahl von Kanalkorrelationsinformationen beinhaltet, die der Mehrzahl von Sätzen von periodischen TRS entsprechen.

7. Verfahren nach einem der Ansprüche 1-6, wobei Empfangen des TRS Empfangen des periodischen TRS umfasst, und wobei⁴ Kanalkorrelationsinformationen auf dem periodischen TRS basieren.

8. Verfahren nach einem der Ansprüche 1-7, ferner umfassend:
Berichten (902), an die Netzwerkentität (104), von Fähigkeiten der UE (102) zum Messen der Kanalkorrelationsinformationen basierend auf mindestens einem von: dem periodischen TRS, dem aperiodischen TRS oder dem semi-persistenten TRS.

9. Verfahren nach einem der Ansprüche 2-8, wobei die Konfigurationsinformationen eine Aktualisierung eines Parameters des periodischen TRS umfassen, einschließlich mindestens eines von: der Periodizität, einem Offset oder einem Übertragungskonfigurationsindikation-, TCI-, Zustand.

10. Verfahren nach Anspruch 9, ferner umfassend:
Berichten (902), an die Netzwerkentität (104), von Fähigkeiten der UE (102) zum Empfangen der Aktualisierung des Parameters des periodischen TRS.

11. Verfahren nach einem der Ansprüche 8-10, wobei die Konfiguration für den Kanalkorrelationsbericht auf den Fähigkeiten der UE (102) basiert.

12. Verfahren zur drahtlosen Kommunikation an einer Netzwerkentität (104), umfassend:
Übertragen (1004), an eine Benutzerausrüstung, UE, (102), einer Konfiguration für einen Kanalkorrelationsbericht, wobei die Konfiguration eine Kanalmessressource, CMR, für ein Nachführungsreferenzsignal, TRS, angibt;
Übertragen (1010), an die UE (102), einer Auslöseindikation für den Kanalkorrelationsbericht basierend auf der CMR für das TRS;
Übertragen (1012), an die UE (102), des TRS, wobei das TRS mindestens eines von einem periodischen TRS, einem aperiodischen TRS oder einem semi-persistenten TRS beinhaltet; und
Empfangen (1016), von der UE (102), des Kanalkorrelationsberichts, einschließlich Kanalkorrelationsinformationen, die dem TRS zugeordnet sind.

13. Verfahren nach Anspruch 12, ferner umfassend:
Unterlassen der Konfiguration eines reportQuantity-Parameters, um einen anderen Wert als "timeDomainChannelProperty" für den Kanalkorrelationsbericht basierend auf dem periodischen TRS anzugeben.

14. Verfahren nach einem der Ansprüche 12-13, wobei Übertragen des TRS Übertragen des periodischen TRS umfasst, wobei das Verfahren ferner umfasst:
Übertragen (1006), an die UE (102), von Konfigurationsinformationen, die eine Periodizität des periodischen TRS angeben, wobei das periodische TRS ein Kanalzustandsinformationsreferenzsignal, CSI-RS, zur Zeitoder Frequenznachführung umfasst, und wobei die Konfigurationsinformationen ferner gemeinsame Parameter konfigurieren, einschließlich mindestens eines von: einem Übertragungskonfigurationsindikator-, TCI-, Zustand, einer Bandbreite oder Unterträgern für TRS-Ressourcen für das periodische TRS⁵.

15. Einrichtung zur drahtlosen Kommunikation, umfassend einen Speicher, einen Sendeempfänger und einen Prozessor, der mit dem Speicher und dem Sendeempfänger gekoppelt ist, wobei die Einrichtung konfiguriert ist, um ein Verfahren nach einem der Ansprüche 1-14 zu implementieren.

## Revendications

1. Procédé de communication sans fil au niveau d'un équipement utilisateur, UE (102), comprenant :
la réception (904), à partir d'une entité de réseau (104), d'une configuration pour un rapport de corrélation de canal, la configuration indiquant une ressource de mesure de canal, CMR, pour un signal de référence de suivi, TRS ;
la réception (910), à partir de l'entité de réseau (104), d'une indication de déclenchement pour le rapport de corrélation de canal sur la base de la CMR pour le TRS ;
la réception (912), à partir de l'entité de réseau (104), du TRS, le TRS comportant au moins l'un des éléments suivants : un TRS périodique, un TRS apériodique ou un TRS semi-persistant ; et
la transmission (916), à l'entité de réseau (104), du rapport de corrélation de canal comportant des informations de corrélation de canal associées au TRS.

2. Procédé selon la revendication 1, comprenant en outre :
la réception (906), à partir de l'entité réseau (104), d'informations de configuration indiquant une périodicité du TRS périodique, dans lequel le TRS périodique comprend un signal de référence d'informations d'état de canal, CSI-RS, pour le suivi du temps ou de la fréquence¹.

3. Procédé selon l'une quelconque des revendications 1 et 2, dans lequel la configuration indique un délai pour mesurer le TRS périodique pour les informations de corrélation de canal².

4. Procédé selon l'une quelconque des revendications 2 et 3, dans lequel les informations de configuration configurent en outre des paramètres communs comportant au moins un des éléments suivants : un état d'indicateur de configuration de transmission, TCI, une bande passante ou des sous-porteuses pour des ressources TRS pour le TRS périodique³.

5. Procédé selon l'une quelconque des revendications 2 à 4, dans lequel les informations de configuration configurent en outre un paramètre reportQuantity pour indiquer une valeur de 'timeDomainChannelProperty' pour le rapport de corrélation de canal sur la base du TRS périodique.

6. Procédé selon l'une quelconque des revendications 1 à 5, dans lequel le TRS comporte une pluralité d'ensembles de TRS périodiques, et dans lequel le rapport de corrélation de canal comporte une pluralité d'informations de corrélation de canal correspondant à la pluralité d'ensembles de TRS périodiques.

7. Procédé selon l'une quelconque des revendications 1 à 6, dans lequel la réception du TRS comprend la réception du TRS périodique, et dans lequel⁴ les informations de corrélation de canal sont basées sur le TRS périodique.

8. Procédé selon l'une quelconque des revendications 1 à 7, comprenant en outre :
le signalement (902), à l'entité de réseau (104), des capacités de l'UE (102) pour mesurer les informations de corrélation de canal sur la base d'au moins l'un des éléments suivants : le TRS périodique, le TRS apériodique ou le TRS semi-persistant.

9. Procédé selon l'une quelconque des revendications 2 à 8, dans lequel les informations de configuration comprennent une mise à jour d'un paramètre du TRS périodique comportant au moins l'un des éléments suivants : la périodicité, un décalage ou un état d'indicateur de configuration de transmission, TCI.

10. Procédé selon la revendication 9, comprenant en outre :
le signalement (902), à l'entité de réseau (104), des capacités de l'UE (102) pour recevoir la mise à jour du paramètre du TRS périodique.

11. Procédé selon l'une quelconque des revendications 8 à 10, dans lequel la configuration pour le rapport de corrélation de canal est basée sur les capacités de l'UE (102).

12. Procédé de communication sans fil au niveau d'une entité de réseau (104), comprenant :
la transmission (1004), à un équipement utilisateur, UE, (102), d'une configuration pour un rapport de corrélation de canal, la configuration indiquant une ressource de mesure de canal, CMR, pour un signal de référence de suivi, TRS ;
la transmission (1010), à l'UE (102), d'une indication de déclenchement pour le rapport de corrélation de canal sur la base de la CMR pour le TRS ;
la transmission (1012), à l'UE (102), du TRS, le TRS comportant au moins l'un des éléments suivants : un TRS périodique, un TRS apériodique ou un TRS semi-persistant ; et
la réception (1016), à partir de l'UE (102), du rapport de corrélation de canal comportant des informations de corrélation de canal associées au TRS.

13. Procédé selon la revendication 12, comprenant en outre :
le fait de s'abstenir de configurer un paramètre reportQuantity pour indiquer une valeur autre que 'timeDomainChannelProperty' pour le rapport de corrélation de canal sur la base du TRS périodique.

14. Procédé selon l'une quelconque des revendications 12 et 13, dans lequel la transmission du TRS comprend la transmission du TRS périodique, le procédé comprenant en outre :
la transmission (1006), à l'UE (102), d'informations de configuration indiquant une périodicité du TRS périodique, dans lequel le TRS périodique comprend un signal de référence d'informations d'état de canal, CSI-RS, pour le suivi du temps ou de la fréquence, et dans lequel les informations de configuration configurent en outre des paramètres communs comportant au moins l'un des éléments suivants : un état d'indicateur de configuration de transmission, TCI, une bande passante ou des sous-porteuses pour des ressources TRS pour le TRS périodique⁵.

15. Appareil de communication sans fil comprenant une mémoire, un émetteur-récepteur et un processeur couplé à la mémoire et à l'émetteur-récepteur, l'appareil étant configuré pour mettre en œuvre un procédé selon l'une quelconque des revendications 1 à 14.
